(19) Europäisches Patentamt
European Patent Office
Office européen des brevets

(11) EP 3 353 252 B1

(12) **FASCICULE DE BREVET EUROPEEN**

(45) Date de publication et mention de la délivrance du brevet:
**11.09.2019 Bulletin 2019/37**

(21) Numéro de dépôt: **16785545.1**

(22) Date de dépôt: **22.09.2016**

(51) Int Cl.:
***C09D 183/04*** (2006.01) ***C08G 77/38*** (2006.01)

(86) Numéro de dépôt international:
**PCT/FR2016/000145**

(87) Numéro de publication internationale:
**WO 2017/051084 (30.03.2017 Gazette 2017/13)**

# (54) COMPOSITION SILICONE RETICULABLE POUR LA REALISATION DE REVETEMENTS ANTI-ADHERENTS POUR SUPPORTS SOUPLES ET ADDITIF PROMOTEUR D'ACCROCHAGE CONTENU DANS CETTE COMPOSITION

VERNETZBARE SILIKONZUSAMMENSETZUNG ZUR HERSTELLUNG VON NICHTKLEBRIGEN BESCHICHTUNGEN FÜR FLEXIBLE SUBSTRATE UND IN DIESER ZUSAMMENSETZUNG ENTHALTENES HAFTFÖRDERNDES ADDITIV

CROSSLINKABLE SILICONE COMPOSITION FOR THE PRODUCTION OF NON-STICK COATINGS FOR FLEXIBLE SUBSTRATES AND AN ATTACHMENT-PROMOTING ADDITIVE CONTAINED IN THIS COMPOSITION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.09.2015 FR 1501991**

(43) Date de publication de la demande:
**01.08.2018 Bulletin 2018/31**

(73) Titulaire: **ELKEM SILICONES France SAS**
**69003 Lyon (FR)**

(72) Inventeurs:
- **FEDER, Michel**
  **69100 Villeurbanne (FR)**
- **WHITE, John**
  **69620 Letra (FR)**
- **MARROT, Sebastien**
  **69008 Lyon (FR)**

(74) Mandataire: **Mekki, Boualem et al**
**Elkem Silicones France SAS**
**Industrial Property Department**
**55, rue des Frères Perret**
**69192 Saint Fons (FR)**

(56) Documents cités:
**US-A1- 2007 197 742**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 353 252 B1

## Description

Le domaine de l'invention est celui des compositions silicones réticulables ou réticulées, susceptibles d'être utilisées, notamment, pour former un revêtement ou film hydrofuge et anti-adhérent pour supports souples par exemple en papier ou analogues et sous forme de films en polymère naturel ou synthétique.

Ces compositions silicones anti-adhérentes, durcissables sont appliquées sur de tels supports, de manière à faciliter l'enlèvement de matières adhésives contrecollées de manière réversible sur ces supports.

Ces compositions silicones liquides sont appliquées sur les films supports dans des dispositifs industriels d'enduction comportant des cylindres fonctionnant à très grande vitesse (par exemple 600 m/min). Il est clair que dans ces procédures d'enduction à très grande vitesse, la viscosité de la composition silicone liquide d'enduction doit être minutieusement adaptée aux conditions opératoires d'enduction.

En pratique, le taux de dépôt de silicone anti-adhérent est compris entre 0,1 et 2 de préférence entre 0,3 et 1 g/m$^2$, ce qui correspond à des épaisseurs de l'ordre du micromètre.
Une fois appliquée sur le support souple, la composition silicone réticule pour former un revêtement solide en silicone (e.g. élastomère) anti-adhérent et/ou hydrofuge.

Compte tenu des cadences industrielles d'enduction à très haute vitesse, la cinétique de réticulation doit être extrêmement rapide pour conduire à une réticulation correcte, c'est-à-dire que les films silicones anti-adhérents doivent être suffisamment réticulés pour pouvoir remplir au mieux leur fonction d'anti-adhérence et posséder les qualités mécaniques souhaitables. L'appréciation de la qualité de la réticulation du revêtement silicone anti-adhérent peut notamment se faire au travers du dosage des composés extractibles non réticulés, dont la quantité doit être la plus réduite possible. Par exemple, le taux d'extractibles est préférablement inférieur à 5%, dans des conditions industrielles normales de réticulation.

L'anti-adhérence de la face externe libre du revêtement silicone s'exprime au travers de la force de décollement, qui doit être faible et contrôlée, pour l'élément destiné à être disposé sur le support revêtu par le film silicone anti-adhérent. Classiquement, cet élément peut être la face adhésive d'une étiquette ou d'un ruban du même nom.

Ainsi, outre cette anti-adhérence faible et contrôlée, l'adhérence du revêtement silicone sur son support doit être très élevée. Cette propriété d'adhérence s'apprécie par exemple à l'aide du test de métier de "rub off", qui consiste à frotter la surface du revêtement avec le doigt et à mesurer le nombre de passages successifs avant dégradation du revêtement.

Il importe également que ces compositions silicones d'enduction, réticulables par hydrosilylation e.g. Si-H / Si-Vi, aient une durée de vie à température ambiante la plus longue possible, lorsqu'elles sont sous forme de bain d'enduction dans les machines industrielles d'enduction.

Les supports souples revêtus d'un film silicone anti-adhérent peuvent être par exemple:

- un papier ou un film polymère du type polyoléfine (polychlorure de vinyle (PVC), PolyPropylène ou Polyéthylène) ou de type polyester (PolyEthylèneTéréphtalate ou PET),
- un ruban adhésif dont la face interne est enduite d'une couche d'adhésif sensible à la pression et dont la face externe comporte le revêtement silicone anti-adhérent ;
- ou un film polymère de protection de la face adhésive d'un élément autocollant ou adhésif sensible à la pression.

Pour des raisons évidentes de sécurité de manipulation et de toxicité, on vise dans la présente invention des compositions silicone avantageusement sans solvant.

Au-delà de cet aspect, il est préférable que, d'un point de vue économique, ces compositions silicone d'enduction avantageusement sans solvant puissent être utilisées sur des équipements industriels standards d'enduction adaptés à des supports souples en papier. Cela suppose que lesdites compositions aient une viscosité relativement basse (par exemple inférieure ou égale à 1000 mPa.s) pour faciliter leur manipulation, pour avoir une bonne qualité d'enduction et pour réduire le problème de formation de brouillard ("misting") qui apparaît aux très grandes vitesses d'enduction industrielles.

Une autre contrainte à prendre en compte pour la formulation des compositions silicone liquides d'enduction est que le coefficient de friction du revêtement d'élastomère silicone réticulé soit contrôlable, de manière à faciliter les opérations d'enroulement/déroulement des supports souples en polymère (notamment en polyester tel que le PET), utiles comme "liners" pour étiquettes.

Il est important pour cette application que le revêtement silicone élastomère ne nuise ni à l'aspect lisse, ni à la transparence, ni aux propriétés mécaniques du support. L'aspect lisse et les propriétés mécaniques sont nécessaires pour un échenillage de précision à très grande vitesse. La transparence est souhaitable pour l'inspection de la régularité du film à très grande vitesse, à l'aide de détecteurs optiques.

Dans un revêtement anti-adhérent, le contrôle de la force de décollement est important. Avantageusement, ce contrôle doit être effectif à basse et à haute vitesse. L'équilibre entre les forces de décollement à basse vitesse et les

forces de décollement à haute vitesse est appelé communément le profil d'anti-adhérence.

Au-delà des propriétés évoquées ci-dessus pour tous supports il convient avant tout que l'adhérence ou l'accrochage du revêtement silicone sur le support, mesurée par la résistance à l'abrasion soit optimale et durable dans le temps, ceci même en présence de l'adhésif de l'étiquette.

Or, dans le cadre de l'invention, on s'intéresse plus spécialement à la cinétique de réticulation de la composition silicone d'enduction ainsi qu'à l'optimisation de l'adhésion ou d'accrochage du revêtement silicone sur le support même quand il est soumis à des conditions de température et humidité élevée, par exemple 50°C et 70°% d'humidité relative.

On connaît par la demande EP1594693, des compositions silicone anti-adhérentes ayant une adhésion améliorée sur supports papier ou polymère et comprenant à titre d'additifs promoteur d'accrochage, des organopolysiloxanes porteurs d'au moins un motif époxy ou un motif anhydride d'acide carboxylique et d'au moins un motif SiH. La demande de brevet EP 2563870 décrit des additifs promoteur d'accrochage comprenant des motifs fonctionnels époxy et des motifs SiH caractérisés par une teneur en motifs époxy inférieure ou égale à 100mmol/g d'additif d'accrochage. La demande US2007197742 décrit également des organohydrogénopolysiloxanes comprenant des motifs epoxy.

Il a été maintenant trouvé que l'utilisation comme additifs d'accrochage d'organopolysiloxanes linéaires où l'ensemble des motifs siloxyles présents dans la chaîne sont porteurs soit de motifs époxy soit de motifs SiH permettent un accrochage du revêtement silicone sur le support optimale avec une stabilité dans le temps accrue, ceci même en présence de l'adhésif de l'étiquette.

Dans ce contexte, la présente invention a pour objectif essentiel de proposer de nouvelles compositions silicones liquides d'enduction, avantageusement sans solvant, réticulables en revêtement anti-adhérent et/ou hydrofuge pour support souple, de manière instantanée et conduisant à des revêtements silicones réticulés de très bonne qualité, en particulier en termes d'accrochage/adhérence sur le support et de profil d'anti-adhérence avec une très bonne stabilité dans le temps.

Un autre objectif essentiel de l'invention est de proposer de nouvelles compositions silicones liquides d'enduction, additivées par un promoteur d'accrochage perfectionné, avantageusement sans solvant, qui réticulent rapidement en revêtement anti-adhérent et/ou hydrofuge pour supports souples, tels que des papiers ou des films polymères du type polyoléfine (polychlorure de vinyle (PVC), PolyPropylène ou Polyéthylène) ou de type polyester (PolyEthylèneTéréphtalate -PET-) et où la concentration en catalyseur peut être diminuée.

Un autre objectif essentiel de l'invention est de proposer de nouvelles compositions silicones liquides d'enduction, additivées par un promoteur d'accrochage perfectionné, permettant de préparer un revêtement réticulé sur un support souple ayant:

- d'une part, une réticulation suffisante pour avoir des propriétés mécaniques et d'adhérence du coating convenables,
- et, d'autre part, un faible taux d'extractibles pour une bonne permanence des propriétés antiadhérentes favorable en particulier pour la préparation et l'utilisation des étiquettes adhésives issues de ces complexes.

Un autre objectif essentiel de l'invention est de proposer de nouvelles compositions silicones liquides d'enduction, additivées par un promoteur d'accrochage perfectionné, avantageusement sans solvant, réticulables en revêtement anti-adhérent et/ou hydrofuge pour supports souples, cette réticulation s'effectuant rapidement à température modérée, ces compositions étant par ailleurs dotées de longues durées de vie en bain, à température ambiante.

Un autre objectif essentiel de l'invention est de proposer de nouvelles compositions silicone liquides d'enduction, additivées par un promoteur d'accrochage perfectionné, réticulables en revêtement anti-adhérent et/ou hydrofuge pour support souple, faciles à préparer et économiques.

Un autre objectif essentiel de l'invention est de proposer un nouveau procédé de réalisation d'un revêtement, hydrofuge et anti-adhérent sur un support souple (par exemple un papier ou un polymère), ayant plus spécialement des propriétés améliorées d'accrochage grâce à un additif promoteur d'accrochage, tout en satisfaisant par ailleurs aux exigences de contrôle du profil de la force de décollement, de faible taux d'extractibles et de coefficient de friction approprié, le tout avec une composition de départ avantageusement sans solvant, de viscosité compatible avec le revêtement à haute vitesse sans "misting".

Un autre objectif essentiel de l'invention est de proposer un nouveau procédé pour augmenter l'accrochage (i.e la résistance à l'abrasion) d'un revêtement silicone réticulé/durci, hydrofuge et anti-adhérent, appliqué sur tout support (e.g. papier ou polymère), et obtenu à partir d'une composition silicone susceptible de réticuler/durcir par polyaddition et comprenant un additif promoteur d'adhérence perfectionné et performant.

Un autre objectif essentiel de l'invention est de proposer un nouveau support souple (e.g. papier ou polymère), présentant au moins un revêtement, hydrofuge, anti-adhérent, à base d'une composition silicone réticulée/durcie par polyaddition, et présentant d'excellentes propriétés d'accrochage, de contrôle du profil de la force de décollement, de dureté (% extractibles) et de coefficient de friction approprié, le tout en partant d'une composition de départ avantageusement sans solvant, de viscosité compatible avec le revêtement à haute vitesse sans "misting".

Ces objectifs, parmi d'autres, sont atteints par la présente invention qui concerne en premier lieu une composition silicone **A** comprenant une base silicone **B** susceptible de réticuler ou durcir par polyaddition et caractérisée en ce qu'elle comprend au moins un additif **X** qui est un organopolysiloxane linéaire comprenant des motifs siloxyles **(I.1)** à **(I.3)** de formules suivantes:

- $$Y_a Z^1_b SiO_{\frac{4-(a+b)}{2}} \quad \textbf{(I.1)}$$
- $$Z^2_3 SiO_{\frac{1}{2}} \quad \textbf{(I.2)}$$
- $$H_d Z^3_e SiO_{\frac{4-(d+e)}{2}} \quad \textbf{(I.3)}$$

et ne comprenant pas de motifs de formule **(I.4)**:

- $$Z^2_2 SiO_{\frac{2}{2}} \quad \textbf{(I.4)}$$

dans lesquelles

- a=1 et b=1 ou 2
- d=1 et e=1 ou 2
- le symbole Y représente un radical comprenant un groupe hydrocarboné ayant de 2 à 20 atomes de carbone et une fonction époxy, avec éventuellement un ou plusieurs hétéroatomes tel qu'un atome d'oxygène, de préférence le symbole Y est choisi parmi les radicaux constitués par le groupe : alkylglycidyléther, époxyalkyle linéaire, ramifié ou cyclique, époxyalcényle linéaire, ramifié ou cyclique et glycidyl-ester d'acide carboxylique,
- les symboles $Z^1$, $Z^2$ et $Z^3$ identiques ou différents, représentent, un groupe hydrocarboné monovalent ayant de 1 à 30 atomes de carbone, de préférence choisi parmi le groupe constitué par les groupes alkyles ayant de 1 à 8 atomes de carbone et les groupes aryles ayant de 6 à 12 atomes de carbone, et encore plus préférentiellement choisis parmi le groupe constitué par un groupe méthyle, éthyle, propyle, 3,3,3-trifluoropropyle, xylyle, tolyle et phényle,

avec les conditions suivantes :

- l'additif **X** comprend, par molécule, au moins deux motifs siloxyles **(I.1)** porteurs de groupes hydrocarbonés époxy-fonctionnels, au moins trois motifs siloxyles **(I.3)** porteurs de groupes hydrogénosiloxyles et un nombre de motifs siloxyles total **N** compris entre 7 et 30 et
- l'additif **X** a une teneur en motifs siloxyles **(I.1)** supérieure ou égale à 0,2 mol pour 100 g d'additif **X.**

Il est du mérite des inventeurs d'avoir mis au point un additif **X** réticulant et promoteur d'accrochage qui est un organopolysiloxane linéaire dont tous les motifs siloxyles dans la chaîne sont fonctionnalisés soit par un motif Si-H **(I-3)** soit par un motif Si époxy **(I-1)** et dont le nombre total des motifs siloxyle N est compris entre **7 et 30.**

Grâce à ce nouvel additif **X,** l'accrochage du revêtement silicone sur le support souple est amélioré, avec un excellent maintien de l'accrochage dans le temps, ceci même en présence de l'adhésif de l'étiquette.

De préférence, l'additif X ne contient pas de groupes fonctionnels alkoxy, vinyl, hydroxyle ou méthacryloxy.

Il est à noter que les propriétés d'accrochage sur support sont d'autant plus positives, qu'elles perdurent longtemps de quelques semaines à plusieurs mois, dans des conditions sévères d'humidité et de température. Cette pérennité est d'autant plus remarquable qu'elle s'observe également lorsque le revêtement anti-adhérent est en contact avec l'adhésif, en particulier lorsque celui-ci est un acrylique.

Un avantage de l'utilisation d'un additif d'accrochage et réticulant **X** dans la composition **A** selon l'invention est qu'il permet d'obtenir un support souple (e.g. papier ou polymère), comportant au moins un revêtement, hydrofuge et anti-adhérent présentant une excellente résistance à l'abrasion après au moins 21 jours de stockage à 50% et sous 70% d'humidité relative. Cette excellente résistance à l'abrasion du revêtement silicone sur le support souple a été vérifiée après 160 jours de stockage à 50% et sous 70% d'humidité relative

Un autre avantage de l'utilisation d'un additif d'accrochage et réticulant **X** selon l'invention est qu'il présente une excellente réactivité et qu'il améliore la cinétique de réticulation de la composition **A.** Par conséquent la quantité de catalyseur mise en oeuvre dans la composition **A** peut être diminuée tout en maintenant une bonne réactivité et un bon accrochage du revêtement silicone sur le support.

Conformément à une disposition préférée de l'invention, dans l'additif **X** le ratio molaire entre les motifs siloxyles **(I.1)** et les motifs siloxyles **(I.3)** est compris entre 0,5 et 4, de préférence compris entre 0,8 et 3,5 et encore plus préférentiellement entre 1 et 3,5.

Selon un mode préférentiel, l'additif **X** est constitué des motifs siloxyles choisis parmi les motifs siloxyles **(I.1)** à **(I.3)** de formules suivantes:

- $$Y_aZ^1_bSiO_{\frac{4-(a+b)}{2}} \quad \textbf{(I.1)}$$
- $$Z^2_3SiO_{\frac{1}{2}} \quad \textbf{(I.2)}$$
- $$H_dZ^3_eSiO_{\frac{4-(d+e)}{2}} \quad \textbf{(I.3)}$$

dans lesquelles

- a=1 et b=1 ou 2 ,
- d=1 et e=1 ou 2, et
- les symboles Y, $Z^1$, $Z^2$ et $Z^3$ sont tels que définis ci-dessus.

Selon un autre mode préférentiel, l'additif **X** est constitué de motifs siloxyles choisis parmi les motifs siloxyles **(I.1)** à **(I.3)** de formules suivantes :

- $$Y_aZ^1_bSiO_{\frac{4-(a+b)}{2}} \quad \textbf{(I.1)}$$
- $$Z^2_3SiO_{\frac{1}{2}} \quad \textbf{(I.2)}$$
- $$H_dZ^3_eSiO_{\frac{4-(d+e)}{2}} \quad \textbf{(I.3)}$$

dans lesquelles

- a=1 et b=1 ou 2,
- d=1 et e=1, et
- les symboles Y, $Z^1$, $Z^2$ et $Z^3$ sont tels que définis ci-dessus.

L'additif **X** peut être obtenu par hydrosilylation de synthons organiques comprenant au moins un cycle hydrocarboné dans lequel est inclus un atome d'oxygène par un organopolyhydrogénosiloxane linéaire ne comprenant pas de motifs **(I.4)** tels que décrits précédemment. Ces réactions d'hydrosilylation peuvent être catalysées par le platine, notamment par du platine supporté sur charbon comme décrit dans le brevet EP 0904315 ou par des complexes de platine avec des ligands carbène comme décrit dans le brevet EP 1309647.. De préférence, le catalyseur utilisé sera un complexe de platine avec des ligands carbène car la réaction d'hydrosilylation est mieux maîtrisée et la stabilité au stockage de l'additif **X** obtenu est améliorée.

De préférence, l'additif **X** a une teneur en motifs siloxyles **(I.1)** comprise entre 0,20 et 0,45 mol/100g d'additif **X.**

Encore plus avantageusement l'additif **X** a une teneur en motifs siloxyles **(I.1)** supérieure ou égale à 0,2 mol pour 100 g d'additif **X** et une teneur en motifs siloxyles **(I.3)** supérieure ou égale à 0,3 mol pour 100 g d'additif **X.**

Selon un mode encore plus avantageux, l'additif **X** a une teneur en motifs siloxyles **(I.1)** comprise entre 0,20 et 0,45 mol/100g d'additif **X** et une teneur en motifs siloxyles **(I.3)** comprise entre 0,3 et 0,85 mol/100g d'additif **X.**

Cet additif présente aussi l'avantage de se conserver de manière prolongée, dans un état liquide, non gélifié, propre à être utilisé dans une composition à déposer sur un support pour former un revêtement anti-adhérent.

Grâce à l'invention, les revêtements obtenus ont non seulement un excellent accrochage ("rub-off"), mais sont également dotés d'une force de décollement suffisamment élevée à grande vitesse et de bonnes propriétés mécaniques et physiques (aspect lisse, transparence et bon coefficient de friction).

Les performances atteintes grâce à l'invention en termes de qualité de la réticulation par polyaddition : réactivité/niveau de réticulation/cinétique, sont tout à fait intéressantes, comme en témoigne les faibles taux d'extractibles obtenus, pour ce qui concerne la réactivité et le niveau de réticulation.

Le revêtement obtenu est particulièrement adhérent sur le support, permet d'apporter la propriété d'anti-adhérence ("release") vis-à-vis des adhésifs types adhésifs sensibles à la pression, et présente une excellente résistance mécanique au contact prolongé avec ces adhésifs, y compris acryliques.

Ces caractéristiques avantageuses sont particulièrement exploitables pour réaliser l'anti-adhérence de supports souples par exemple papier ou polymère, utiles, par exemple, comme "liners" d'étiquettes autocollantes (adhésif sensible à la pression), se présentant sous forme de rouleaux ou de bobines de films e.g. fabriqués à très grande vitesse.

Ceci est d'autant plus intéressant que ces résultats sont obtenus avec une composition silicone, dont le comportement rhéologique de la composition silicone n'est pas affecté (pas trop visqueuse), de sorte qu'elle est parfaitement apte à être enduite sur tout support et notamment sur tout support souple et qu'elle est peu ou pas sujette au "misting" dans des conditions industrielles d'enduction.

En outre, les compositions silicones d'enduction selon l'invention peuvent avantageusement être "sans solvant". Cela signifie qu'elles sont exemptes de solvant et, en particulier, sans solvant organique. On conçoit aisément les avantages que cela procure s'agissant de l'hygiène et de la sécurité.

Selon un mode de réalisation préféré, l'additif **X** a un nombre **N1** de motifs siloxyles **(I.1)** et un nombre **N3** de motifs siloxyles **(I.3)** qui répondent aux conditions suivantes :

- $2 \leq$ **N1** $\leq 10$ et de préférence $3 \leq$ **N1** $\leq 7$, et
- $3 \leq$ **N3** $\leq 20$ et de préférence $5 \leq$ **N3** $\leq 20$.

Il est particulièrement avantageux d'utiliser un additif **X** qui a un nombre total **N** de motifs siloxyles compris entre 7 et 25 bornes incluses et encore plus préférentiellement entre 7 et 15.

De préférence, l'additif **X** a une viscosité dynamique à 25°C comprise entre 10 et 700 mPa.s et de préférence entre 15 et 300 mPa.s.

Sur le plan quantitatif, il est avantageux que la teneur en additif **X** réticulant et promoteur d'accrochage soit comprise entre 0,3 et 10% en poids par rapport à la masse totale de la composition **A,** de préférence entre 0,3 et 7%.

Toutes les viscosités dont il est question dans le présent exposé correspondent à une grandeur de viscosité dynamique à 25°C dite "Newtonienne", c'est-à-dire la viscosité dynamique qui est mesurée, de manière connue en soi, avec un viscosimètre Brookfield à un gradient de vitesse de cisaillement suffisamment faible pour que la viscosité mesurée soit indépendante du gradient de vitesse.

De préférence, pour le motif siloxyle **(I.1)** Y est choisi parmi le groupe constitué par les groupements **(R-1)** à **(R-6)** de formules suivantes :

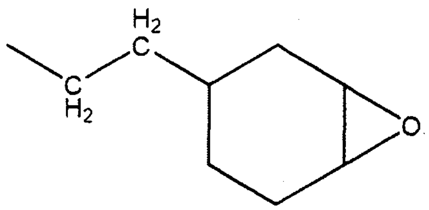

**(R-1)**

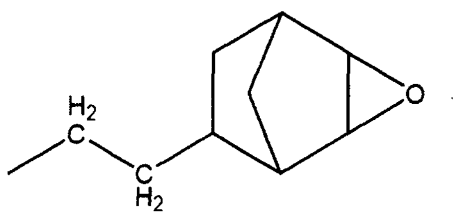

**(R-2)**

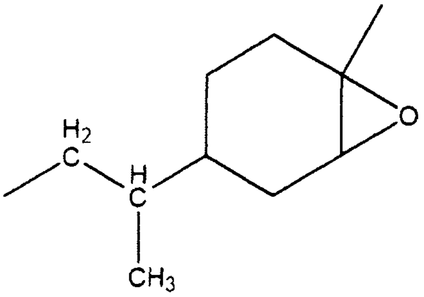

**(R-3)**

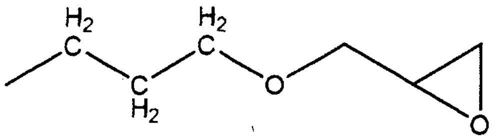

**(R-4)**

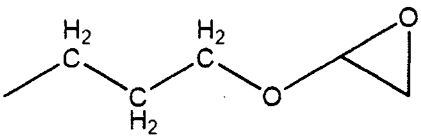

**(R-5)**

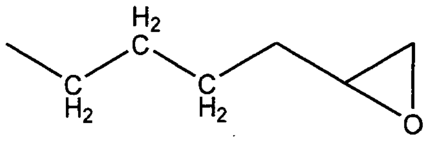

**(R-6)**

Selon un mode de réalisation particulièrement préféré, le motif siloxyle **(I.1)** Y est le groupement **(R-4)** de formule suivante :

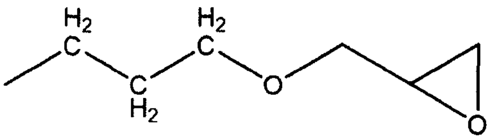

**(R-4)**

Dans tout le présent document, on se référera à des éléments de nomenclature classique pour désigner les motifs siloxyle M, D, T, Q des organopolysiloxanes. A titre d'ouvrage de référence, on peut citer : NOLL " Chemistry and Technology of Silicones ", chapitre 1.1, page 1-9, Academic Press, 1968 - 2ème édition.

De préférence, la base silicone **B** comprend :

(A) au moins un organopolysiloxane alcénylé **E** comprenant au moins deux motifs siloxyles **(I.5)** de formule suivante :

$$W_aZ_bSiO_{\frac{4-(a+b)}{2}} \quad \textbf{(I.5)}$$

- dans laquelle :
  - a= 1 ou 2, b= 0,1 ou 2 et a+b= 1, 2 ou 3;
  - W représente indépendamment un groupe alcényle, de préférence ayant de 2 à 6 atomes de carbone et, plus préférentiellement encore un groupe vinyle ou allyle, et
  - Z représente représentent, indépendamment un groupe hydrocarboné monovalent ayant de 1 à 30 atomes de carbone et de préférence choisi parmi le groupe constitué par les groupes alkyles ayant de 1 à 8 atomes de carbone inclus et les groupes aryles, et encore plus préférentiellement choisi parmi le groupe constitué par un radical méthyle, éthyle, propyle, 3,3,3-trifluoropropyle, xylyle, tolyle et phényle,

(B) éventuellement au moins huile silicone réticulante **D** comprenant par molécule, au moins trois atomes d'hydrogène liés au silicium,

(C) au moins un catalyseur **F** de polyaddition, de préférence un composé d'au moins un métal appartenant au

groupe du platine;
(D) éventuellement au moins un inhibiteur de réticulation **G** ;
(E) éventuellement un système modulateur d'adhérence **H** ;
(F) éventuellement au moins un diluant I;
(G) éventuellement au moins un additif anti-brouillard **J,**
(H) éventuellement au moins une résine organopolysiloxane **K,** et
(I) éventuellement au moins un organopolysiloxane **L** non fonctionnalisé constitué des motifs siloxyles **(I.6)** de formule :

$$Z^1_a SiO_{\frac{4-a}{2}} \quad \textbf{(I.6)}$$

dans laquelle :

- a= 0, 1, 2 ou 3,
- $Z^1$ représente, indépendamment un groupe hydrocarboné monovalent ayant de 1 à 30 atomes de carbone et de préférence choisi parmi le groupe constitué par les groupes alkyles ayant de 1 à 8 atomes de carbone inclus et les groupes aryles, et encore plus préférentiellement choisi parmi le groupe constitué par un radical méthyle, éthyle, propyle, 3,3,3-trifluoropropyle, xylyle, tolyle et phényle.

Selon un autre mode de réalisation de l'invention, la base silicone **B** comprend :

(A) au moins un organopolysiloxane alcénylé **E** comprenant au moins deux motifs siloxyles **(I.5)** de formule suivante :

$$W_a Z_b SiO_{\frac{4-(a+b)}{2}} \quad \textbf{(I.5)}$$

- dans laquelle:
  - a= 1 ou 2, b= 0, 1 ou 2 et a+b= 1, 2 ou 3;
  - W représente indépendamment un groupe alcényle, de préférence ayant de 2 à 6 atomes de carbone et, plus préférentiellement encore un groupe vinyle ou allyle, et
  - Z représente représentent, indépendamment un groupe hydrocarboné monovalent ayant de 1 à 30 atomes de carbone et de préférence choisi parmi le groupe constitué par les groupes alkyles ayant de 1 à 8 atomes de carbone inclus et les groupes aryles, et encore plus préférentiellement choisi parmi le groupe constitué par un radical méthyle, éthyle, propyle, 3,3,3-trifluoropropyle, xylyle, tolyle et phényle,

(B) au moins huile silicone réticulante **D** comprenant par molécule, au moins trois atomes d'hydrogène liés au silicium,
(C) au moins un catalyseur **F** de polyaddition, de préférence un composé d'au moins un métal appartenant au groupe du platine;
(D) éventuellement au moins un inhibiteur de réticulation **G** ;
(E) éventuellement un système modulateur d'adhérence **H** ;
(F) éventuellement au moins un diluant **I;**
(G) éventuellement au moins un additif anti-brouillard **J,**
(H) éventuellement au moins une résine organopolysiloxane **K,** et
(I) éventuellement au moins un organopolysiloxane **L** non fonctionnalisé constitué des motifs siloxyles **(I.6)** de formule :

$$Z^1_a SiO_{\frac{4-a}{2}} \quad \textbf{(I.6)}$$

dans laquelle :

- a= 0, 1, 2 ou 3,

- $Z^1$ représente, indépendamment un groupe hydrocarboné monovalent ayant de 1 à 30 atomes de carbone et de préférence choisi parmi le groupe constitué par les groupes alkyles ayant de 1 à 8 atomes de carbone inclus et les groupes aryles, et encore plus préférentiellement choisi parmi le groupe constitué par un radical méthyle, éthyle, propyle, 3,3,3-trifluoropropyle, xylyle, tolyle et phényle.

L'huile silicone réticulante **D** est de préférence un organopolysiloxane comportant des motifs siloxyle de formules **(I.7)** et éventuellement **(I.8)** suivants:

$$H_a L^1_b SiO_{\frac{4-(a+b)}{2}} \qquad \textbf{(I.7)}$$

$$Z^1_c SiO_{\frac{4-c}{2}} \qquad \textbf{(I.8)}$$

dans laquelle :

- a= 1 ou 2, b= 0, 1 ou 2 et a+b= 1, 2 ou 3;
- H représente un atome d'hydrogène,
- $L^1$ représente, indépendamment, un groupe hydrocarboné monovalent ayant de 1 à 30 atomes de carbone et de préférence choisi parmi le groupe constitué par les groupes alkyles ayant de 1 à 8 atomes de carbone inclus et les groupes aryles, et encore plus préférentiellement choisi parmi le groupe constitué par un radical méthyle, éthyle, propyle, 3,3,3-trifluoropropyle, xylyle, tolyle et phényle, et
- c= 0, 1, 2 ou 3,
- $Z^1$ représente, indépendamment un groupe hydrocarboné monovalent ayant de 1 à 30 atomes de carbone et de préférence choisi parmi le groupe constitué par les groupes alkyles ayant de 1 à 8 atomes de carbone inclus et les groupes aryles, et encore plus préférentiellement choisi parmi le groupe constitué par un radical méthyle, éthyle, propyle, 3,3,3-trifluoropropyle, xylyle, tolyle et phényle

La viscosité dynamique de l'huile silicone réticulante **D** est supérieure ou égale à 5, de préférence supérieur ou égale à 10 et, plus préférentiellement encore, est comprise entre 20 et 1000 mPa.s.
L'huile silicone réticulante **D** peut présenter une structure linéaire, ramifiée ou cyclique. Le degré de polymérisation est supérieur ou égal à 2. Plus généralement, il est inférieur à 5 000.
Des exemples de motifs hydrogénosiloxyle de formule **(I.7)** sont :

M' : $H(CH_3)_2SiO_{1/2}$,
D' : $HCH_3SiO_{2/2}$, et
D' avec groupement phénylé: $H(C_6H_5)SiO_{2/2}$.

Des exemples d'huile silicone réticulante **D** sont :

- $M_2$'$D_x$Dy' : les diméthylpolysiloxanes à extrémités hydrogénodiméthylsilyle, poly(diméthylsiloxane) (méthylhydrogénosiloxy) $\alpha,\omega$-diméthylhydrogéno-siloxane,
- $M_2D_x$Dy' : les copolymères à motifs diméthyl-hydrogénométhylpolysiloxanes (diméthyl) à extrémités triméthylsilyle,
- $M_2$'$D_x$Dy' : les copolymères à motifs diméthyl-hydrogénométhylpolysiloxanes à extrémités hydrogénodiméthylsilyle,
- $M_2$Dx' : les hydrogénométhylpolysiloxanes à extrémités triméthylsilyle,
- $D'_4$ : les hydrogénométhylpolysiloxanes cycliques,

Avec x et y étant des nombres entiers ou décimaux (valeur moyenne) variant suivant la structure utilisée, déterminés suivant les techniques usuelles du domaine technique.
Il est avantageux que l'organopolysiloxane alcénylé **E** ait une viscosité à 25° C au moins égale à 10 mPa.s, de préférence comprise entre 50 et 1.000 mPa.s.
L'organopolysiloxane alcénylé **E** peut présenter une structure linéaire, ramifiée ou cyclique. Son degré de polymérisation est, de préférence, compris entre 2 et 5 000. Des exemples de motifs siloxyle de formule **(I.5)** sont le motif vinyldiméthylsiloxane, le motif vinylphénylméthylsiloxane et le motif vinylsiloxane.
Des exemples d'organopolysiloxanes **E** sont les diméthylpolysiloxanes à extrémités diméthylvinylsilyle, les copolymères méthylvinyldiméthylpolysiloxanes à extrémités triméthylsilyle, les copolymères méthylvinyldiméthylpolysiloxanes à extrémités diméthylvinylsilyle, les méthylvinylpolysiloxanes cycliques.

Les catalyseurs **F** de polyaddition sont également bien connus. On utilise, de préférence, les composés du platine et du rhodium. On peut, en particulier, utiliser les complexes du platine et d'un produit organique décrit dans les brevets US-A-3 159 601, US-A-3 159 602, US-A-3 220 972 et les brevets européens EP-A-0 057 459, EP-A-0 188 978 et EP-A-0 190 530, les complexes du platine et d'organosiloxanes vinylés décrits dans les brevets US-A-3 419 593, US-A-3 715 334, US-A-3 377 432 et US-A-3 814 730. Le catalyseur **F** généralement préféré est le platine. Dans ce cas, la quantité pondérale de catalyseur **F,** calculée en poids de platine-métal, est généralement comprise entre 2 et 400 ppm, de préférence entre 5 et 200 ppm basée sur le poids total de la composition **A.**

Un des avantages de la composition selon l'invention est que l'on peut utiliser un faible taux de catalyseur de type platine. Ainsi avantageusement la teneur en métal platine de la composition A est comprise entre 10 et 120 ppm, préférentiellement entre 10 et 95 ppm, plus préférentiellement entre 10 et 70 ppm et encore plus préférentiellement entre 10 et 45 ppm massiques basé sur le poids total de la composition **A.**

Selon un mode de réalisation particulier, les quantités des constituants sont telles que le rapport molaire [≡SiH]/[≡SiAlcényle] est compris entre 1 et 7 et de préférence entre 1 et 5 avec :

- [≡SiH]= nombre total de mole de motifs siloxyles comprenant un atome d'hydrogène liés au silicium, et
- [≡SiAlcényle] = nombre total de mole de motifs siloxyles comprenant un radical alcényle liés au silicium.

L'inhibiteur de réticulation **G** (ou ralentisseur de la réaction d'addition) peut, quant à lui, être choisi parmi les composés suivants :

- un organopolysiloxane, avantageusement cyclique, et substitué par au moins un alcényle, le tétraméthylvinyltétrasiloxane étant particulièrement préféré,
- la pyridine,
- les phosphines et les phosphites organiques,
- les amides insaturés,
- les maléates alkylés
- et les alcools acétyléniques.

Ces alcools acétyléniques, (cf. FR-B-1 528 464 et FR-A-2 372 874), qui font partie des bloqueurs thermiques de réaction d'hydrosilylation préférés, ont pour formule :

$$(R^1)(R^2)C(OH)\text{-}C \equiv CH$$

formule dans laquelle :

- $R^1$ est un radical alkyle linéaire ou ramifié, ou un radical phényle ;
- $R^2$ est un atome d'hydrogène, un radical alkyle linéaire ou ramifié, ou un radical phényle ;
- les radicaux $R^1$, $R^2$ et l'atome de carbone situé en a de la triple liaison pouvant éventuellement former un cycle ; et
- le nombre total d'atomes de carbone contenu dans $R^1$ et $R^2$ étant d'au moins 5, de préférence de 9 à 20.

Lesdits alcools sont, de préférence, choisis parmi ceux présentant un point d'ébullition supérieur à 250°C. On peut citer à titre d'exemples :

- l'éthynyl-1-cyclohexanol 1 ;
- le méthyl-3 dodécyne-1 ol-3 ;
- le triméthyl-3,7,11 dodécyne-1 ol-3 ;
- le diphényl-1,1 propyne-2 ol-1 ;
- l'éthyl-3 éthyl-6 nonyne-1 ol-3 ;
- le méthyl-3 pentadécyne-1 ol-3.

Ces alcools $\alpha$-acétyléniques sont des produits du commerce.

Un tel inhibiteur de réticulation est présent à raison de 3000 ppm au maximum, de préférence à raison de 100 à 2000 ppm par rapport au poids total de la composition **A.**

Le système modulateur d'adhérence **H** est sélectionné parmi les systèmes connus. Il peut s'agir de ceux décrits dans le brevet français FR-B-2 450 642, le brevet US -B-3 772 247 ou la demande de brevet européen EP-A-0 601 938. A titre d'exemples, on peut citer les modulateurs à base :

o de 96 à 85 parties en poids d'au moins une résine organopolysiloxane (A) de type : $MD^{Vi}Q$, $MM^{Vi}Q$, $MD^{Vi}T$, $M[M^{Hexényle}]Q$, ou $M[M^{Allyloxypropyle}]Q$,

◦ de 4 à 15 parties en poids d'au moins une résine (B) de type: MD'Q, MDD'Q, MDT', MQ, ou MDQ.

Avec

- T' : $HsiO_{3/2}$,
- D' : $H(CH_3)SiO_{2/2}$,
- M : $(CH_3)_3SiO_{1/2}$
- Q : $SiO_{4/2}$
- D : $(CH_3)_2SiO_{2/2}$
- $D^{Vi}$: $(CH_3)(Vinyl)SiO_{2/2}$
- M : $(CH_3)_3SiO_{1/2}$
- $M^{Vi}$ : $(CH_3)_2(Vinyl)SiO_{1/2}$
- $M^{Héxényle}$ : $(CH_3)_2(hexényle)SiO_{1/2}$

La composition peut également inclure un autre additif promoteur d'accrochage. Ce dernier est de préférence choisi parmi les silanes époxy-fonctionnels, de préférence dans le groupe comprenant :

- le (3,4-époxycyclohexyl)éthyltriéthoxy-silane [Coatosil® 1770],
- le Tris(3-(triméthoxysilyl)propyl)isocyanurate [A-Link 597],
- le (gammaglycidoxypropyle)triméthoxysilane [Dynasilan® GLYMO],
- le (gamma méthacryloxypropyle)triméthoxysilane [Dynasilan® MEMO],
- des composés silicones comportant à la fois des groupements SiVi et des groupements époxy fonctionnels, et
- leurs mélanges.

Les concentrations adaptées de cet autre additif promoteur d'accrochage sont, par exemple, comprises entre 0,5 et 5%, de préférence entre 1 et 3% en poids par rapport au poids total de la composition **A.**

Le diluant I éventuellement présent dans la composition est avantageusement choisi parmi les $\alpha$ oléfines notamment celles comportant de 4 à 15 atomes de carbone par molécule.

D'autres additifs fonctionnels peuvent être incorporés dans la composition. Ces additifs peuvent être choisis parmi les charges telles que par exemple des microbilles de verre, des agents anti-brouillard **J** ou anti-"misting" bien connus dans le domaine technique.

La composition **A** selon l'invention peut comprendre en outre au moins un photoamorceur (e.g. cationique), de préférence choisi parmi les borates d'onium, plus préférentiellement parmi les borates de iodonium et/ou les boranes.

A titre d'exemple de photoamorceur, on peut citer celui qui correspond à la formule :

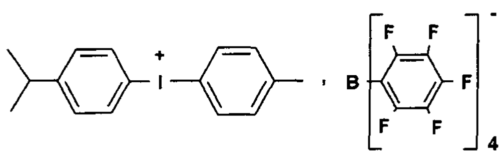

Pour plus de détails sur les borates d'onium appropriés, on se référera, par exemple, aux demandes de brevet ou brevets suivants: US-B-6,864,311; US-B-6,291,540; US-B-5,468,902.

Le photoamorceur est avantageusement dilué dans un solvant protique, par exemple l'alcool isopropylique. Le taux de dilution est e.g. compris entre 10 et 30 %, en particulier égal à 20 % +/- 2.

Dans le cas où la composition comprend un photoamorceur, le revêtement peut être soumis à une exposition thermique et/ou actinique, par exemple UV, pour accélérer la réaction.

Pour plus de détails sur les boranes appropriés, on se référera, par exemple, aux demandes de brevet ou brevets suivants : US-B-6,743,883; US-A-2004-0048975.

La préparation de la composition silicone selon l'invention, utilisable notamment comme base d'enduction pour la réalisation de revêtements anti-adhérents et hydrofuges, cette composition étant du type de celle définie ci-dessus, consiste simplement à mélanger les constituants selon l'invention à l'aide de moyens et de méthodologies de mélange connus de l'homme de l'art.

Ces compositions peuvent aussi être utilisées éventuellement pour le traitement de supports papier, pour apporter des propriétés d'anti-adhérence et avec une résistance améliorée du revêtement silicone vis-à-vis d'adhésifs agressifs (par exemple certains adhésifs sensibles à la pression "PSA: pressure sensitive adhesive" acryliques).

Un autre objet de l'invention concerne un élastomère silicone susceptible d'être obtenu par réticulation et/ou durcissement de la composition silicone **A** selon l'invention et telle que décrite ci-dessus.

Selon un autre de ses aspects, l'invention concerne un procédé de réalisation d'un revêtement, hydrofuge et anti-adhérent sur un support, de préférence un film polymère, plus préférentiellement un film polymère en polyester, caractérisé en ce qu'il consiste à appliquer sur ce support au moins une couche d'une composition silicone telle que définie ci-dessus, et à faire en sorte que cette couche réticule, de préférence en l'activant par chauffage.

La composition silicone **A** selon l'invention peut être déposée sur des supports souples papier ou polymère. Par exemple comme support souple on peut citer : les films de polymère tels que les polyoléfines (e.g. polyéthylène, polypropylène...), les polyesters (e.g. PET ...), les papiers de types divers (supercalendré, couché...), les cartons, les feuilles de cellulose ou les feuilles en métal. Les supports souples en polyester par exemple du genre PET revêtus d'une couche anti-adhérente en silicone, sont utilisés comme "liners" pour des étiquettes adhésives.

Les moyens et les méthodologies de mélange sont connus de l'homme de l'art, qu'il s'agisse de compositions sans solvant ou d'émulsion.

Ces compositions peuvent être appliquées à l'aide de dispositifs utilisés sur les machines industrielles d'enduction du papier tels qu'une tête d'enduction à cinq rouleaux, des systèmes à lames d'air ou à barre égalisatrice, sur des supports ou matériaux souples, puis durcies par circulation dans des fours-tunnels chauffés à une température comprise entre 70 et 200°C.Le temps de passage dans ces fours est fonction de la température. Il est généralement de l'ordre de 5 à 15 secondes à une température de l'ordre de 100°C et de l'ordre de 1,5 à 3 secondes à une température de l'ordre de 180°C.

Selon l'invention, pour la réticulation du revêtement, le support enduit avec la composition silicone polyaddition est placé à une température de préférence inférieure ou égale à 180°C pendant moins de 10 secondes.

Lesdites compositions peuvent être déposées sur tout matériau ou substrat souple tel que papiers de types divers (supercalendré, couché...), cartons, feuilles de cellulose, feuilles en métal, films de matière plastique (polyester, polyéthylène, polypropylène...).

Les quantités de compositions déposées sont de l'ordre de 0,5 à 2 g par $m^2$ de surface à traiter, ce qui correspond au dépôt de couches de l'ordre de 0,5 à 2 $\mu$m.

Les matériaux ou supports ainsi enduits peuvent ultérieurement être mis en contact avec des matières adhésives quelconques caoutchoucs, acryliques ou autres, sensibles à la pression. La matière adhésive est alors aisément détachable dudit support ou matériau.

Selon un autre de ses objets, l'invention vise également un support caractérisé en ce qu'il comporte au moins un revêtement, hydrofuge et anti-adhérent obtenu selon le procédé selon l'invention et tel que décrit ci-dessus ou à partir de composition silicone **A** selon l'invention et telle que décrite ci-dessus.

De préférence le support est un support souple choisi parmi le groupe constitué par un papier, un film polymère de type polyoléfine, polypropylène, polyéthylène ou polyester, et un film polymère de protection de la face adhésive d'un élément autocollant ou adhésif sensible à la pression.

Encore plus préférentiellement, le support est un film polymère en polyester.

Les revêtements silicone anti-adhérents selon l'invention sont bien et durablement accrochés sur les supports souples, même dans des conditions drastiques d'humidité et de température, et au contact prolongé avec un adhésif acrylique. Ils sont réticulés/durcis (peu d'extractibles). Ils ont un profil de force de décollement tel que la force de pelage reste élevée même à grande vitesse (bonne anti-adhérence). Ils sont lisses et transparents, ce qui finit de faire d'eux des supports d'étiquettes performants.

Les exemples suivants sont donnés à titre indicatif et ne peuvent être considérés comme une limite du domaine de l'invention.

## EXEMPLES

I- Préparation des additifs d'accrochage :

Différents additifs ont été synthétisés constitués de:

- n motifs $YCH_3SiO_{2/2}$
- m motifs $HCH_3SiO_{2/2}$
- p motifs $(CH_3)_2SiO_{2/2}$
- 2 motifs $(CH_3)_3Si_{1/2}$

où Y est le groupement époxy de formule suivante

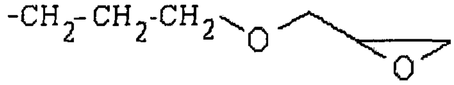

**Y**

**Additif I1-**

Dans un réacteur de 1 L sous azote, on introduit 181,0 g de toluène. Le milieu est placé sous agitation et chauffé à 85°C. Lorsque la température est atteinte, 10,2 mg d'un complexe de platine carbène, commercialisé par Umicore sous le nom commercial Umicore HS432® est introduit. Puis, un mélange d'allyl glycidyl ether (AGE) (236,8 g, 2,07 mol) et d'un polyméthylhydrogénosiloxane **H2** avec 9 motifs $(CH_3)HSiO_{2/2}$ et deux motifs terminaux $(CH_3)_3SiO_{1/2}$ (363,2 g, SiH = 4,77 mol) est ajouté goutte à goutte pendant 4 heures. Après retour à température ambiante, le milieu réactionnel est dévolatilisé à 25-30°C sous 0-3 mbar pendant 30 min puis à 85°C (consigne) sous 1 mbar pendant 3h pour conduire à une huile silicone fonctionnalisée composée de n motifs $YCH_3SiO_{2/2}$ m motifs $HCH_3SiO_{2/2}$ et deux motifs $(CH_3)_3Si_{1/2}$ avec les caractéristiques suivantes : n+m = 9 ; [SiH] = 586 mmol/100g ; [Epoxy] = 291 mmol/100g ; Viscosité = 32 mPa.s.

**Additif I2**

Dans un ballon de 500 mL sous azote, on introduit 50,3 g de toluène et 472 mg de Pt/C. Ce mélange est placé sous agitation magnétique et chauffé à 90°C. Un mélange d'allyl glycidyl ether (AGE) (46,4 g, 0,40 mol) et d'un polyméthylhydrogénosiloxane **H2** avec 9 motifs $(CH_3)HSiO_{2/2}$ et deux motifs terminaux $(CH_3)_3SiO_{1/2}$ (100,22 g, SiH = 1,35 mol) est ajouté goutte à goutte pendant 47,5 min. Lorsque l'ajout est terminé, le chauffage est maintenu pendant une nuit. Après retour à température ambiante, le milieu réactionnel est filtré sur carton et téflon, puis traité au noir 2S à 60°C pendant 6h puis à nouveau filtré. Le traitement au noir est répété. Le milieu réactionnel est ensuite dévolatilisé à 80°C (consigne) sous 1 mbar pendant 3h pour conduire à une huile silicone fonctionnalisée composée de n motifs $YCH_3SiO_{2/2}$, m motifs $HCH_3SiO_{2/2}$ et deux motifs $(CH_3)_3Si_{1/2}$ avec les caractéristiques suivantes : n+m = 9, [SiH] = 720 mmol/100g ; [Epoxy] = 219 mmol/100g ; Viscosité = 27 mPa.s.

**Additif I3**

Dans un ballon de 500 mL sous azote, on introduit 105,1 g de toluène et 11 mg de d'un complexe de platine carbène, commercialisé par Umicore sous le nom commercial Umicore HS432®. Ce mélange est placé sous agitation magnétique et chauffé à 85°C. Un mélange d'allyl glycidyl ether (AGE) (249,2 g, 2,18 mol) et de polyméthylhydrogénosiloxane **H3** comprenant 20 motifs $(CH_3)HSiO_{2/2}$ et deux motifs terminaux $(CH_3)_3SiO_{1/2}$ (302,6 g, SiH = 4,52 mol) est ajouté goutte à goutte pendant 3 heures. Lorsque l'ajout est terminé, l'ampoule d'addition est rincée avec 45,4 g de toluène et le chauffage est maintenu pendant 2 heures. Après retour à température ambiante, le milieu réactionnel est dévolatilisé à 92°C sous 1 mbar pendant 3 heures pour conduire à une huile silicone fonctionnalisée (449,0g) composée de n motifs $YCH_3SiO_{2/2}$, m motifs $HCH_3SiO_{2/2}$ et deux motifs $(CH_3)_3Si_{1/2}$ avec les caractéristiques suivantes : n+m = 20, [SiH] = 568 mmol/100g ; [Epoxy] = 324,3 mmol/100g ; Viscosité = 186 mPa.s.

**Additif C1**

Dans un réacteur de 1L, on introduit 200 g de toluène et 1,80 g de Pt/C (1.5% poids en platine). Ce mélange est placé sous agitation et on chauffe à 80°C. Un mélange d'allyl glycidyl ether (AGE) (53 g, 0,465 mol) et de polyméthylhydrogénosiloxane **H4** avec 4 motifs $(CH_3)HSiO_{2/2}$,9 motifs $(CH_3)_2SiO_{2/2}$ et deux motifs terminaux $(CH_3)_3SiO_{1/2}$ (500 g, SiH = 1,75 mol) est ajouté goutte-à-goutte pendant ½ heure. Lorsque l'ajout est terminé, le chauffage est maintenu pendant 1 heure. Puis le chauffage est arrêté et après retour à température ambiante, le milieu réactionnel est filtré pour éliminer le Pt/C. Enfin, le milieu réactionnel est dévolatilisé à 80°C sous 10 mbars pendant 3 heures pour conduire à une huile silicone fonctionnalisée (516 g - Rdt : 93%) composée de n motifs $YCH_3SiO_{2/2}$, m motifs $HCH_3SiO_{2/2}$, 9 motifs $(CH_3)_2SiO_{2/2}$ et deux motifs $(CH_3)_3Si_{1/2}$ avec les caractéristiques suivantes : n+m=4, [SiH] = 0,25 mol/100g; [Epoxy] = 75 mmol/100g; Viscosité = 13 mPa.s.

**Additif C2**

Dans un réacteur de 1L, on introduit 200 g de toluène et 1,80 g de Pt/C (1.5% poids en platine). Ce mélange est placé sous agitation et on chauffe à 80°C. Un mélange d'allyl glycidyl ether (AGE) (159 g, 1,395 mol) et de polyméthylhydrogénosiloxane **H4** avec 4 motifs $(CH_3)HSiO_{22}$, 9 motifs $(CH_3)_2SiO_{2/2}$ et deux motifs terminaux $(CH_3)_3SiO_{1/2}$ (500 g, SiH = 1,75 mol) est ajouté goutte-à-goutte pendant ½ heure. Lorsque l'ajout est terminé, le chauffage est maintenu pendant 1 heure. Puis le chauffage est arrêté et après retour à température ambiante, le milieu réactionnel est filtré pour éliminer le Pt/C. Enfin, le milieu réactionnel est dévolatilisé à 80°C sous 10 mbars pendant 3 heures pour conduire à une huile silicone fonctionnalisée (599 g - Rdt : 91%) composée de n motifs $YCH_3SiO_{2/2}$, m motifs $HCH_3SiO_{2/2}$, 9 motifs $(CH_3)_2SiO_{2/2}$ et deux motifs $(CH_3)_3Si_{1/2}$ avec les caractéristiques suivantes : n+m=4, [SiH] = 0,097 mol/100g ; [Epoxy] = 188 mmol/100g ; Viscosité = 25 mPa.s.

**Additif C3**

Dans un réacteur de 1L, on introduit 200 g de toluène et 1,80 g de Pt/C (1.5% poids en platine). Ce mélange est placé sous agitation et on chauffe à 80°C. Un mélange d'allyl glycidyl ether (AGE) (75 g, 0,657 mol) et de polyméthylhydrogénosiloxane **H6** avec 50 motifs $(CH_3)HSiO_{2/2}$, 50 motifs $(CH_3)_2SiO_{2/2}$ et deux motifs terminaux $(CH_3)_3SiO_{1/2}$ (500 g, SiH = 3,65 mol) est ajouté goutte-à-goutte pendant ½ heure. Lorsque l'ajout est terminé, le chauffage est maintenu pendant 1 heure. Puis le chauffage est arrêté et après retour à température ambiante, le milieu réactionnel est filtré pour éliminer le Pt/C. Enfin, le milieu réactionnel est dévolatilisé à 80°C sous 10 mbars pendant 3 heures pour conduire à une huile silicone fonctionnalisée (518 g - Rdt : 90%) composée de n motifs $YCH_3SiO_{2/2}$ m motifs $HCH_3SiO_{2/2}$, 50 motifs $(CH_3)_2SiO_{2/2}$ et deux motifs $(CH_3)_3Si_{1/2}$ avec les caractéristiques suivantes : n+m=50, [SiH] = 0,55 mol/100g ; [Epoxy] = 76 mmol/100g ; Viscosité = 250 mPa.s.

**Additif C4**

Dans un réacteur de 10L sous azote, on introduit 1733,9 g de toluène et 2,7 g de Pt-NHC en solution dans du toluène. Ce mélange est placé sous agitation et chauffé à 77°C. Un mélange d'allyl glycidyl ether (AGE) (390,5 g, 3,42 mol) et de polyméthylhydrogénosiloxane **H3** comprenant 20 motifs $(CH_3)HSiO_{2/2}$ et deux motifs terminaux $(CH_3)_3SiO_{1/2}$ (5599,5 g, SiH = 82,23 mol) est ajouté à l'aide d'une pompe pendant 54 min. Lorsque l'ajout est terminé, le chauffage est maintenu pendant 1 heure. Puis le chauffage est arrêté et après retour à température ambiante, le milieu réactionnel est dévolatiiisé à 40°C sous 5 mbar pendant 1 heure puis montée progressive de la température jusqu'à 85°C pendant 4h. La température est maintenue à 85°C pendant 1h pour conduire à une huile silicone fonctionnalisée (7727,8g) composée de n motifs $YCH_3SiO_{2/2}$, m motifs $HCH_3SiO_{2/2}$ et deux motifs $(CH_3)_3Si_{1/2}$ avec les caractéristiques suivantes : n+m = 20, [SiH] = 1,30 mol/100g ; [Epoxy] = 37,7 mmol/100g ; Viscosité = 12,3 mPa.s.

**Additif C5**

Dans un ballon de 500 mL sous azote, on introduit 75,3 g de toluène et 645 mg de noir 2S 1,56%. Ce mélange est placé sous agitation magnétique et chauffé à 90°C. Un mélange d'allyl glycidyl ether (AGE) (47,8 g, 0,42 mol) et de polyméthylhydrogénosiloxane **H5** avec 10 motifs $(CH_3)HSiO_{2/2}$, 10 motifs $(CH_3)_2SiO_{2/2}$ et deux motifs terminaux $(CH_3)_3SiO_{1/2}$ (150,6 g, SiH = 1,0 mol) est ajouté goutte à goutte pendant 32 min. Lorsque l'ajout est terminé, le chauffage est maintenu pendant 2h. Après refroidissement, le milieu est filtré sur carton et téflon. Le brut est ensuite traité au noir 2S à 60°C pendant une nuit puis à nouveau filtré. Le milieu réactionnel est ensuite dévolatilisé à 30°C sous 4 mbar pendant 3 heures puis à 80°C (consigne) sous 4 mbar pendant 4h pour conduire à une huile silicone fonctionnalisée (169,2 g) composée de n motifs $YCH_3SiO_{2/2}$, m motifs $HCH_3SiO_{2/2}$, 10 motifs $(CH_3)_2SiO_{2/2}$ et deux motifs $(CH_3)_3Si_{1/2}$ avec les caractéristiques suivantes : n+m=10, [SiH] = 326,6 mmol/100g ; [Epoxy] = 180,8 mmol/100g ; Viscosité = 46,6 mPa.s.

**Additif C6**

Dans un ballon de 500 mL sous azote, on introduit 51,3 g de toluène et 398 mg de Pt/C. Ce mélange est placé sous agitation magnétique et chauffé à 90°C. Un mélange d'allyl glycidyl ether (AGE) (23,1 g, 0,20 mol) et de polyméthylhydrogénosiloxane **H2** (100,40 g, SiH = 1,35 mol) est ajouté goutte à goutte pendant 20,25 min. Lorsque l'ajout est terminé, le chauffage est descendu à 60°C et le milieu est filtré sur carton et téflon. Le brut est ensuite traité au noir 4S à 60°C pendant 7h puis à nouveau filtré. Le milieu réactionnel est ensuite dévolatilisé à 30°C sous 10 mbar pendant 2 heures puis à 80°C (consigne) sous 1 mbar pendant 2h pour conduire à une huile silicone fonctionnalisée composée de n motifs $YCH_3SiO_{2/2}$ , m motifs $HCH_3SiO_{2/2}$ et deux motifs $(CH_3)_3Si_{1/2}$ avec les caractéristiques suivantes : n+m = 9, [SiH] = 962 mmol/100g ; [Epoxy] = 116 mmol/100g ; Viscosité = 12 mPa.s.

Tableau 1 : Récapitulatif des additifs d'accrochage :

| Additif d'accrochage | Nombre total de motifs siloxyles | Nombre motifs $(CH_3)_2SiO_{2/2}$ | [SiH] mmol/ 100g | [Epoxy] mmol/ 100g | [SiH]/ [Epoxy] |
|---|---|---|---|---|---|
| I1 Invention | 11 | 0 | 586 | 291 | 2,0 |
| Invention | 11 | 0 | 720 | 219 | 3,3 |
| I3 Invention | 22 | 0 | 568 | 324 | 1,8 |
| C1 Comparatif | 15 | 9 | 250 | 75 | 3,3 |
| C2 Comparatif | 15 | 9 | 97 | 188 | 0,5 |
| C3 Comparatif | 102 | 50 | 550 | 76 | 7,2 |
| C4 Comparatif | 22 | 0 | 1300 | 38 | 34,2 |
| C5 Comparatif | 22 | 10 | 326 | 180 | 1,8 |
| C6 Comparatif | 11 | 0 | 962 | 116 | 8,3 |

II- Essais d'application- Conditions d'enduction et réticulation avec les additifs d'accrochage :

Toutes les enductions ont été réalisées sur une machine d'enduction ROTOMEC à 5 cylindres, avec réticulation du silicone déposé sur un support film PET ou papier glassine avec un dépôt compris entre 0,3 et 1 $g/m^2$.

Une fois sorti de la machine d'enduction le film ou papier siliconé est soumis au contrôle de l'adhésion et de la résistance à l'abrasion du revêtement selon le test de Rub-off décrit plus loin, ainsi qu'à la teneur en extractibles (fraction silicone non réticulée) laquelle permet de caractériser la réactivité du système.

Puis, on réalise un test de vieillissement qui consiste à placer le film ou papier siliconé en contact avec un adhésif acrylique dans une étuve climatique à 50°C / 70% d'humidité relative (vieillissement accéléré) afin de suivre au cours du temps l'évolution de la résistance à l'abrasion.

La fraction de silicone extractible à la MIBK (méthylisobutyle cétone), c'est-à-dire le taux de silicone non réticulé, est déterminée par absorption atomique en dosant le silicium dans le solvant d'extraction.

La mesure de « Rub-Off » pour vérifier l'adhérence sur le support et la résistance à l'abrasion de la couche silicone consiste à frotter l'index sur le support siliconé pour imposer à la couche des contraintes mécaniques. On note le nombre d'aller-retour avec le doigt jusqu'à apparition du phénomène de rub-off (ou gommage), correspondant à une déchirure en lambeaux du revêtement silicone. La note de 1 indique une mauvaise résistance à l'abrasion de la couche silicone et la note de 10 indique une excellente résistance à l'abrasion de la couche silicone.

Les résultats sont détaillés dans les tableaux 2 à 10 suivants.

Tableau 2 - Film PET 6040 Toray- Fours 180°C -Vitesse 100m/min

| **Composition silicone enduite (en parties en poids)** | | | | |
|---|---|---|---|---|
| | Invention | Invention | Comparatif | Comparatif |
| Huile vinylée milieu de chaîne viscosité 350 mPa.s | 100 | 100 | 100 | 100 |
| Huile silicone réticulante $MD'_{50}M$ | 6.9 | 6.5 | 6.7 | 7.1 |
| Additif | **I1<br>1** | **I1<br>2** | **C3<br>1** | **C3<br>2** |
| Ratio molaire motifs [SiH]/[SiVinyle] | 3 | 3 | 3 | 3 |
| Catalyseur au Pt (ppm) | 120 | 120 | 120 | 120 |
| **Résultats tests adhérence et résistance abrasion** | | | | |
| Extractibles (%) | 4.2 | 3.5 | 4.1 | 3.8 |
| Rub-Off sortie machine | 10 | 10 | 10 | 10 |
| Rub-Off après 3 jours à 50°C et 70% d'humidité | 10 | 10 | 10 | 10 |
| Rub-Off après 7 jours à 50°C et 70% d'humidité | 10 | 10 | 10 | 10 |
| Rub-Off après 14 jours à 50°C et 70% d'humidité | 10 | 10 | 5 | 5 |

(suite)

| Résultats tests adhérence et résistance abrasion | | | | |
|---|---|---|---|---|
| Rub-Off après 42 jours à 50°C et 70% d'humidité | 10 | 10 | 4 | 4 |
| Rub-Off après 70 jours à 50°C et 70% d'humidité | 10 | 10 | 2 | 2 |
| Rub-Off après 160 jours à 50°C et 70% d'humidité | 10 | 10 | **1** | 1 |

Les films PET enduits avec une composition selon l'invention avec l'additif I1 présentent une bonne résistance à l'abrasion mesurée par le test Rub Off même après 160 jours de stockage à 50°C et 70% d'humidité relative.
Les essais comparatifs réalisés avec l'additif C3 avec 102 motifs siloxyles dont 50 motifs $(CH_3)_2SiO_{2/2}$ présentent une mauvaise résistance à l'abrasion après 14 jours à 50°C et 70% d'humidité relative.

Tableau 3 - Film PET 6040 Toray- Fours 180°C- Vitesse 100m/min

| Composition silicone enduite (en parties en poids) | | | | |
|---|---|---|---|---|
| | Invention | Invention | Comparatif | Comparatif |
| Huile vinylée milieu de chaîne viscosité 350 mPa.s | 100 | 100 | 100 | 100 |
| Huile silicone réticulante MD'$_{50}$M | 6.7 | 6.6 | 6.7 | 7.1 |
| Additif | **I1**<br>**0,5** | **I1**<br>1 | **C1**<br>**1.8** | **C1**<br>**3.6** |
| Ratio molaire motifs [SiH]/[SiVinyle] | 3 | 3 | 3 | 3 |
| Catalyseur au Pt (ppm) | 120 | 120 | 120 | 120 |
| **Résultats tests adhérence et résistance abrasion** | | | | |
| Extractibles (%) | Non mesuré | Non mesuré | Non mesuré | Non mesuré |
| Rub-Off sortie machine | 10 | 10 | 10 | 10 |
| Rub-Off 5 jours à 50°C et 70% d'humidité | 10 | 10 | 10 | 10 |
| Rub-Off après 7 jours à 50°C et 70% d'humidité | 10 | 10 | 2 | **1** |
| Rub-Off après 15 jours à 50°C et 70% d'humidité | 10 | 10 | 1 | 1 |
| Rub-Off après 30 jours à 50°C et 70% d'humidité | 10 | 10 | 1 | 1 |

Les films PET enduits avec une composition selon l'invention avec 0,5 ou 1 parties en poids d'additif I1 présentent une bonne résistance à l'abrasion mesurée par le test Rub Off même après 30 jours de stockage à 50°C et 70% d'humidité relative.
Les essais comparatifs réalisés avec l'additif C1 avec 9 motifs $(CH_3)_2SiO_{2/2}$, une teneur en époxy inférieure à 0,2 mol/100g et une teneur en SiH inférieure à 0,3 mol/100g d'additif présentent une mauvaise résistance à l'abrasion après 7 jours à 50°C et 70% d'humidité relative.

Tableau 4 - Film PET 6040 Toray- Fours 180°C - Vitesse 100m/min

| Composition silicone enduite (en parties en poids) | | | | |
|---|---|---|---|---|
| | Invention | Invention | Comparatif | Comparatif |
| Huile vinylée milieu de chaîne viscosité 350 mPa.s | 100 | 100 | 100 | 100 |
| Huile silicone réticulante MD'$_{50}$M | 6.7 | 6.5 | 6.5 | 5.7 |
| Additif | **I1**<br>**1** | **I2**<br>**1,2** | **C6**<br>**1** | **C6**<br>**2,3** |
| Ratio molaire motifs [SiH]/[SiVinyle] | 3 | 3 | 3 | 3 |
| Catalyseur au Pt (ppm) | 120 | 120 | 120 | 120 |

(suite)

| Résultats tests adhérence et résistance abrasion | | | | |
|---|---|---|---|---|
| Extractibles (%) | 4,9 | 3,5 | 4,8 | 3,9 |
| Rub-Off sortie machine | 10 | 10 | 10 | 10 |
| Rub-Off 3 jours à 50°C et 70% d'humidité | 10 | 10 | 10 | 10 |
| Rub-Off 14 jours à 50°C et 70% d'humidité | 10 | 10 | 8 | 10 |
| Rub-Off 28 jours à 50°C et 70% d'humidité | 10 | 10 | 3 | 10 |
| Rub-Off 42 jours à 50°C et 70% d'humidité | 10 | 10 | 3 | 10 |
| Rub-Off 60 jours à 50°C et 70% d'humidité | 10 | 10 | 1 | 10 |
| Rub-Off 125 jours à 50°C et 70% d'humidité | 10 | 10 | 1 | 3 |

Les films PET enduits avec les compositions selon l'invention avec l'additif I1 ou **I2** présentent une bonne résistance à l'abrasion mesurée par le test Rub Off même après 125 jours de stockage à 50°C et 70% d'humidité relative. Les essais comparatifs réalisés avec l'additif C6 avec une teneur en époxy inférieure à 0,2 mol/100g présentent une mauvaise résistance à l'abrasion après 14 jours à 50°C et 70% d'humidité relative (1 partie d'additif) ou après 125 jours de stockage à 50°C et 70% d'humidité relative.

Tableau 5 - Film PET JINDAL- Fours 180°C - Vitesse 100m/min

| Composition silicone enduite (en parties en poids) | | | | |
|---|---|---|---|---|
| | Invention | Invention | Comparatif | Comparatif |
| Mélange huile vinylée milieu de chaîne et huile vinylée milieu et bout de chaîne viscosité 600 mPa.s | 100 | 100 | 100 | 100 |
| Huile silicone réticulante $MD'_{50}M$ | 10 | 9.85 | 9.8 | 9.4 |
| Additif | **I1**<br>**0.5** | **I1**<br>**1** | **C4**<br>**0.5** | **C4**<br>**1** |
| Ratio molaire motifs [SiH]/[SiVinyle] | 2.2 | 2.2 | 2.2 | 2.2 |
| Catalyseur au Pt (ppm) | 100 | 100 | 100 | 100 |
| **Résultats tests adhérence et résistance abrasion** | | | | |
| Extractibles (%) | 2.5 | 2.7 | 3.2 | 2.3 |
| Rub-Off sortie machine | 10 | 10 | 10 | 10 |
| Rub-Off après 10 jours à 50°C et 70% d'humidité | 10 | 10 | 10 | 10 |
| Rub-Off après 36 jours à 50°C et 70% d'humidité | 10 | 10 | 2 | 10 |
| Rub-Off après 52 jours à 50°C et 70% d'humidité | 10 | 10 | 1 | 7 |
| Rub-Off après 76 jours à 50°C et 70% d'humidité | 10 | 10 | 1 | 8 |
| Rub-Off après 87 jours à 50°C et 70% d'humidité | 10 | 10 | 1 | 3 |

Les films PET enduits avec les compositions selon l'invention avec l'additif I1 présentent une bonne résistance à l'abrasion mesurée par le test Rub Off même après 87 jours de stockage à 50°C et 70% d'humidité relative.
Les essais comparatifs réalisés avec l'additif C4 avec une teneur en époxy inférieure à 0,2 mol/100g présentent une mauvaise résistance à l'abrasion après 36 jours à 50°C et 70% d'humidité relative (0,5 partie d'additif C4) ou après 52 jours de stockage à 50°C et 70% d'humidité relative (1 partie additif C4).

Tableau 6 - Film PET JINDAL- Fours 180°C- Vitesse 20m/min

| Composition silicone enduite (en parties en poids) | | |
|---|---|---|
| | Invention | Comparatif |
| Mélange huile vinylée milieu de chaîne et huile vinylée milieu et bout de chaîne viscosité 600 mPa.s | 100 | 100 |
| Huile silicone réticulante $MD'_{50}M$ | 9.6 | 6.65 |
| Additif | **I1**<br>**2** | **C4**<br>**2** |
| Ratio molaire motifs [SiH]/[SiVinyle] | 2.2 | 2.2 |
| Catalyseur au Pt (ppm) | 120 | 120 |
| **Résultats tests adhérence et résistance abrasion** | | |
| Extractibles (%) | 3,2 | 4,4 |
| Rub-Off sortie machine | 10 | 10 |
| Rub-Off après 4 jours à 50°C et 70% d'humidité | 10 | 10 |
| Rub-Off après 10 jours à 50°C et 70% d'humidité | 10 | 5 |
| Rub-Off après 17 jours à 50°C et 70% d'humidité | 10 | 5 |
| Rub-Off après 25 jours à 50°C et 70% d'humidité | 10 | 2 |

Les films PET enduits avec la composition selon l'invention avec l'additif I1 présente une bonne résistance à l'abrasion mesurée par le test Rub Off même après 25 jours de stockage à 50°C et 70% d'humidité relative.
L'essai comparatif réalisé avec l'additif C4 avec une teneur en époxy inférieure à 0,2 mol/100g présentent une mauvaise résistance à l'abrasion après 10 jours à 50°C et 70% d'humidité relative.

Tableau 7-Papier Glassine H53- Fours 140°C- Vitesse 80m/min

| Composition silicone enduite (en parties en poids) | | | |
|---|---|---|---|
| | Invention | Comparatif | Comparatif |
| Huile vinylée milieu et bout de chaîne viscosité 300 mPa.s | 100 | 100 | 100 |
| Modulateur adhérence | 5 | 5 | 5 |
| Huiles silicone réticulante Mélange de $MD'_{50}M$ et $MD'_{50}D_{50}M$ | 6.9 | 6.7 | 6.2 |
| Additif | **I1**<br>0.5 | **C1**<br>1.8 | **C2**<br>0.72 |
| Ratio molaire motifs [SiH]/[SiVinyle] | 2 | 2 | 2 |
| Catalyseur au Pt (ppm) | 35 | 35 | 35 |
| **Résultats tests adhérence et résistance abrasion** | | | |
| Extractibles (%) | 8.2 | 8.2 | 6.3 |
| Rub-Off sortie machine | 10 | 10 | 10 |
| Rub-Off après 14 jours à 50°C et 70% d'humidité | 10 | 10 | 3 |
| Rub-Off après 56 jours à 50°C et 70% d'humidité | 10 | 7 | 2 |
| Rub-Off après 70 jours à 50°C et 70% d'humidité | 10 | 1 | 1 |

Le papier Glassine enduit avec les compositions selon l'invention avec l'additif I1 présente une bonne résistance à l'abrasion mesurée par le test Rub Off même après 70 jours de stockage à 50°C et 70% d'humidité relative.
Les essais comparatifs réalisés avec les additifs C1 et C2 avec 9 motifs $(CH_3)_2SiO_{2/2}$, une teneur en époxy inférieure

à 0,2 mol/100g et une teneur en SiH inférieure à 0,3 mol/100g présentent une mauvaise résistance à l'abrasion après 56 jours à 50°C et 70% d'humidité relative (additif C1) ou après 14 jours de stockage à 50°C et 70% d'humidité relative (additif C2).

Tableau 8 - Papier Glassine H53- Fours 140°C- Vitesse 100m/min

| **Composition silicone enduite (en parties en poids)** | | |
|---|---|---|
| | Invention | Comparatif |
| Huile vinylée milieu et bout de chaîne viscosité 300 mPa.s | 95 | 95 |
| Modulateur adhérence | 5 | 5 |
| Huiles silicone réticulante Mélange de MD'50M et MD'50D50M | 6.9 | 6.9 |
| Additif | **I1**<br>0.5 | **C5**<br>0.75 |
| Ratio molaire motifs [SiH]/[SiVinyle] | 2 | 2 |
| Catalyseur au Pt (ppm) | 35 | 35 |
| **Résultats tests adhérence et résistance abrasion** | | |
| Extractibles (%) | Non mesuré | Non mesuré |
| Rub-Off sortie machine | 10 | 10 |
| Rub-Off après 7 jours à 50°C et 70% d'humidité | 10 | 1 |
| Rub-Off après 15 jours à 50°C et 70% d'humidité | 10 | 1 |
| Rub-Off après 21 jours à 50°C et 70% d'humidité | 10 | 1 |
| Rub-Off après 70 jours à 50°C et 70% d'humidité | 10 | 1 |

Le papier Glassine enduit avec la composition selon l'invention avec l'additif I1 présentent une bonne résistance à l'abrasion mesurée par le test Rub Off même après 70 jours de stockage à 50°C et 70% d'humidité relative. L'essai comparatif réalisé avec l'additif C5 avec 9 motifs $(CH_3)_2SiO_{2/2}$ et une teneur en époxy inférieure à 0,2 mol/100g présente une mauvaise résistance à l'abrasion après 70 jours à 50°C et 70% d'humidité relative.

L'ensemble des résultats présentés dans les tableaux ci-dessus montrent que seuls les additifs d'accrochage selon l'invention **I1, I2 et I3** permettent d'obtenir des résultats satisfaisants lors des mesures de Rub Off réalisées pour mesurer l'adhésion de la couche silicone sur le support papier ou film PET et la résistance à l'abrasion.

Tableau 9 - Film PET 6040 Toray- Fours 180°C- Vitesse 100m/min

| **Composition silicone enduite (en parties en poids)** | | | | |
|---|---|---|---|---|
| | Invention | Invention | Invention | Invention |
| Huile vinylée milieu de chaîne viscosité 350 mPa.s | 100 | 100 | 100 | 100 |
| Huile silicone réticulante $MD'_{50}M$ | 6.7 | 6.7 | 6.7 | 6.7 |
| Additif **I1** | **1** | **1** | **1** | **1** |
| Ratio molaire motifs [SiH]/[SiVinyle] | 3 | 3 | 3 | 3 |
| Catalyseur au Pt (ppm) | 120 | 90 | 60 | 40 |
| **Résultats tests adhérence et résistance abrasion** | | | | |
| Extractibles (%) | Non mesuré | Non mesuré | Non mesuré | Non mesuré |
| Rub-Off sortie machine | 10 | 10 | 10 | 10 |
| Rub-Off 3 jours à 50°C et 70% d'humidité | 10 | 10 | 10 | 10 |
| Rub-Off 7 jours à 50°C et 70% d'humidité | 10 | 10 | 10 | 10 |
| Rub-Off 21 jours à 50°C et 70% d'humidité | 10 | 10 | 10 | 10 |

Cette série d'essais montre que lorsqu'on utilise un additif selon l'invention dans la composition silicone d'enduction la quantité de catalyseur platine utilisée peut être diminuée sans dégrader ni la cinétique de réticulation (vitesse inchangée) ni la résistance à l'abrasion.

Tableau 10 - PET 6040 Toray- Fours 180°C- Vitesse 100m/min

| **Composition silicone enduite (en parties en poids)** | | |
|---|---|---|
| | Invention | Invention |
| Huile vinylée milieu de chaîne viscosité 350 mPa.s | 100 | 100 |
| Huile silicone réticulante $MD'_{50}M$ | 4.5 | 0 |
| Additif I1 | **1** | **6** |
| Ratio molaire motifs [SiH]/[SiVinyle] | 2 | 2 |
| Catalyseur au Pt (ppm) | 120 | 120 |
| **Résultats tests adhérence et résistance abrasion** | | |
| Rub-Off sortie machine | 10 | 10 |
| Rub-Off 3 jours à 50°C et 70% d'humidité | 10 | 10 |
| Rub-Off 7 jours à 50°C et 70% d'humidité | 10 | 10 |
| Rub-Off après 21 jours à 50°C et 70% d'humidité | 10 | 10 |

En augmentant la quantité d'additif selon l'invention dans la composition d'enduction, il peut remplacer complètement l'huile réticulante.

## Revendications

1. Composition silicone A comprenant une base silicone **B** susceptible de réticuler ou durcir par polyaddition et **caractérisée en ce qu'**elle comprend au moins un additif **X** qui est un organopolysiloxane linéaire comprenant des motifs siloxyles **(I.1)** à **(I.3)** de formules suivantes:

   -

$$Y_a Z^1_b SiO_{\frac{4-(a+b)}{2}} \qquad \textbf{(I.1)}$$

   -

$$Z^2_3 SiO_{\frac{1}{2}} \qquad \textbf{(I.2)}$$

   -

$$H_d Z^3_e SiO_{\frac{4-(d+e)}{2}} \qquad \textbf{(I.3)}$$

   et ne comprenant pas de motifs de formule **(I.4):**

   -

$$Z^2_2SiO_{\frac{2}{2}} \quad \textbf{(I.4)}$$

dans lesquelles

- a=1 et b=1 ou 2
- d=1 et e=1 ou 2
- le symbole Y représente un radical comprenant un groupe hydrocarboné ayant de 2 à 20 atomes de carbone et une fonction époxy, avec éventuellement un ou plusieurs hétéroatomes tel qu'un atome d'oxygène, de préférence le symbole Y est choisi parmi les radicaux constitués par le groupe : alkylglycidyléther, époxyalkyle linéaire, ramifié ou cyclique, époxyalcényle linéaire, ramifié ou cyclique et glycidyl-ester d'acide carboxylique,,
- les symboles $Z^1$, $Z^2$ et $Z^3$ identiques ou différents, représentent, un groupe hydrocarboné monovalent ayant de 1 à 30 atomes de carbone, de préférence choisi parmi le groupe constitué par les groupes alkyles ayant de 1 à 8 atomes de carbone et les groupes aryles ayant de 6 à 12 atomes de carbone, et encore plus préférentiellement choisis parmi le groupe constitué par un groupe méthyle, éthyle, propyle, 3,3,3-trifluoropropyle, xylyle, tolyle et phényle,

avec les conditions suivantes :

- l'additif **X** comprend, par molécule, au moins deux motifs siloxyles **(I.1)** porteurs de groupes hydrocarbonés époxyfonctionnels, au moins trois motifs siloxyles **(I.3)** porteurs de groupes hydrogénosiloxyles et un nombre de motifs siloxyles total **N** compris entre 7 et 30 et
- l'additif **X** a une teneur en motifs siloxyles **(I.1)** supérieure ou égale à 0,2 mol pour 100 g d'additif **X.**

**2.** Composition silicone **A** selon la revendication 1 dans laquelle l'additif **X** a une teneur en motifs siloxyles **(I.1)** supérieure ou égale à 0,2 mol pour 100 g d'additif **X** et une teneur en motifs siloxyles **(I.3)** supérieure ou égale à 0,3 mol pour 100 g d'additif **X.**

**3.** Composition silicone **A** selon la revendication 1 dans laquelle l'additif **X** a un nombre **N1** de motifs siloxyles **(I.1)** et un nombre **N3** de motifs siloxyles **(I.3)** qui répondent aux conditions suivantes :

- 2 ≤ **N1** ≤ 10 et de préférence 3 ≤ **N1** ≤ 7, et
- 3 ≤ **N3** ≤ 20 et de préférence 5 ≤ **N3** ≤ 20.

**4.** Composition silicone **A** selon la revendication **1** dans laquelle l'additif **X** a un nombre total **N** de motifs siloxyles compris entre 7 et 25 bornes incluses et encore plus préférentiellement entre 7 et 15.

**5.** Composition silicone **A** selon la revendication **1 caractérisée en ce que** la teneur en additif **X** est comprise entre 0,3 et 10% en poids par rapport à la masse totale de la composition **A,** de préférence entre 0,3 et 7%.

**6.** Composition silicone **A** selon la revendication **1 caractérisée en ce que** la base silicone **B** comprend :

(A) au moins un organopolysiloxane alcénylé **E** comprenant au moins deux motifs siloxyles **(I.5)** de formule suivante :

$$W_aZ_bSiO_{\frac{4-(a+b)}{2}} \quad \textbf{(I.5)}$$

- dans laquelle:

  - a= 1 ou 2, b= 0, 1 ou 2 et a+b= 1, 2 ou 3;
  - W représente indépendamment un groupe alcényle, de préférence ayant de 2 à 6 atomes de carbone et, plus préférentiellement encore un groupe vinyle ou allyle, et
  - Z représente représentent, indépendamment un groupe hydrocarboné monovalent ayant de 1 à 30

atomes de carbone et de préférence choisi parmi le groupe constitué par les groupes alkyles ayant de 1 à 8 atomes de carbone inclus et les groupes aryles, et encore plus préférentiellement choisi parmi le groupe constitué par un radical méthyle, éthyle, propyle, 3,3,3-trifluoropropyle, xylyle, tolyle et phényle,

(B) éventuellement au moins huile silicone réticulante **D** comprenant par molécule, au moins trois atomes d'hydrogène liés au silicium,
(C) au moins un catalyseur **F** de polyaddition, de préférence un composé d'au moins un métal appartenant au groupe du platine;
(D) éventuellement au moins un inhibiteur de réticulation **G** ;
(E) éventuellement un système modulateur d'adhérence **H** ;
(F) éventuellement au moins un diluant **I;**
(G) éventuellement au moins un additif anti-brouillard **J,**
(H) éventuellement au moins une résine organopolysiloxane **K,** et
(I) éventuellement au moins un organopolysiloxane **L** non fonctionnalisé constitués des motifs siloxyles **(I.6)** de formule :

$$Z^1_a SiO_{\frac{4-a}{2}} \qquad \textbf{(I.6)}$$

dans laquelle :

- a= 0, 1, 2 ou 3,
- $Z^1$ représente, indépendamment un groupe hydrocarboné monovalent ayant de 1 à 30 atomes de carbone et de préférence choisi parmi le groupe constitué par les groupes alkyles ayant de 1 à 8 atomes de carbone inclus et les groupes aryles, et encore plus préférentiellement choisi parmi le groupe constitué par un radical méthyle, éthyle, propyle, 3,3,3-trifluoropropyle, xylyle, tolyle et phényle,

**7.** Composition silicone **A** selon la revendication **1 caractérisée en ce que** pour le motif siloxyle **(I.1)** de l'additif **X,** Y est choisi parmi le groupe constitué par les groupements **(R-1)** à **(R-6)** de formules suivantes :

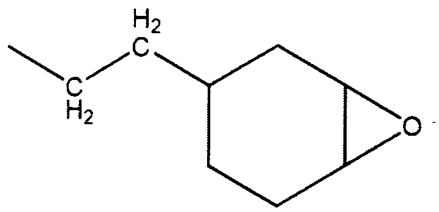

**(R-1)**

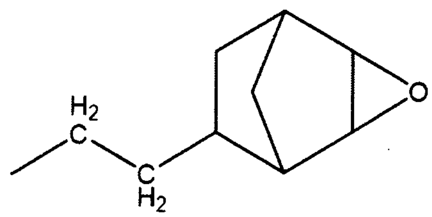

**(R-2)**

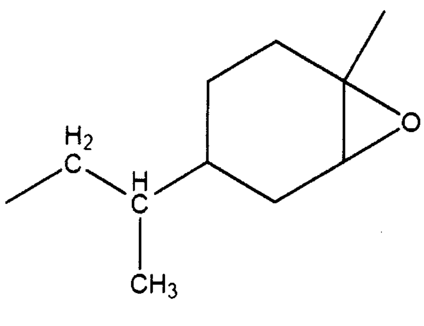

**(R-3)**

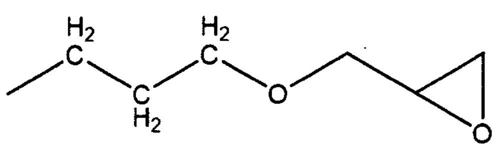

**(R-4)**

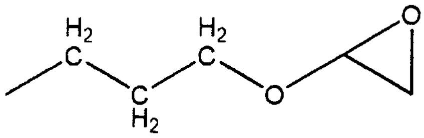

**(R-5)**

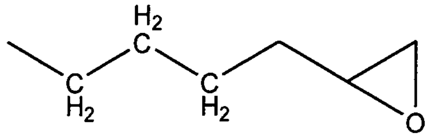

**(R-6)**

8. Composition silicone **A** selon la revendication 1 **caractérisée en ce que** pour le motif siloxyle **(I.1)** de l'additif X, Y est le groupement **(R-4)** de formule suivante :

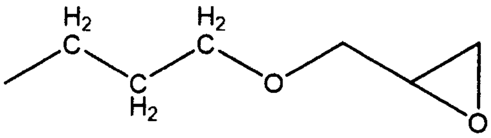

**(R-4)**

9. Composition silicone **A** selon l'une quelconque des revendications précédentes dans laquelle les quantités des constituants sont telles que le rapport molaire [≡SiH]/[≡SiAlcényle] est compris entre 1 et 7 et de préférence entre 1 et 5 avec :

   - [≡SiH]= nombre total de mole de motifs siloxyles comprenant un atome d'hydrogène liés au silicium, et
   - [≡SiAlcényle] = nombre total de mole de motifs siloxyles comprenant un radical alcényle liés au silicium.

10. Composition silicone **A** selon la revendication 1 dans laquelle l'additif **X** a une viscosité dynamique à 25°C (mesurée selon la méthode décrite dans la description) comprise entre 10 et 700 mPa.s et de préférence entre 15 et 300 mPa.s.

11. Elastomère silicone susceptible d'être obtenu par réticulation et/ou durcissement de la composition silicone **A** telle que décrite selon l'une quelconque des revendications 1 à 10.

12. Procédé de réalisation d'un revêtement, hydrofuge et anti-adhérent sur un support **caractérisé en ce qu'**il consiste à appliquer sur au moins une face de ce support au moins une couche de la composition silicone **A** telle que décrite selon l'une quelconque des revendications 1 à 10 et à faire en sorte que cette couche réticule, de préférence en l'activant par chauffage.

13. Support **caractérisé en ce qu'**il comporte au moins un revêtement, hydrofuge et anti-adhérent obtenu selon le procédé telle que décrit dans la revendication 12 ou à partir de composition silicone **A** telle que décrite selon l'une quelconque des revendications 1 à 10.

14. Support selon la revendication 13 **caractérisé en ce qu'**il s'agit d'un support souple choisi parmi le groupe constitué par un papier, un film polymère de type polyoléfine, polypropylène, polyéthylène ou polyester, et un film polymère de protection de la face adhésive d'un élément autocollant ou adhésif sensible à la pression.

**Patentansprüche**

1. Silikonzusammensetzung **A,** umfassend eine Silikonbasis **B,** die durch Polyaddition vernetzt oder gehärtet werden kann, **dadurch gekennzeichnet, dass** sie mindestens ein Additiv **X** umfasst, bei dem es sich um ein lineares Polyorganosiloxan handelt, das Siloxyleinheiten **(I.1)** bis **(I.3)** mit den folgenden Formeln umfasst:

   -

$$Y_a Z^1_b SiO_{\frac{4-(a+b)}{2}} \quad \textbf{(I.1)}$$

-

$$Z^2_3SiO_{\frac{1}{2}} \quad \text{(I.2)}$$

-

$$H_dZ^3_eSiO_{\frac{4-(d+e)}{2}} \quad \text{(I.3)}$$

und keine Einheiten der Formel **(I.4)** umfasst:

-

$$Z^2_2SiO_{\frac{2}{2}} \quad \text{(I.4)}$$

in denen:

- a = 1 und b = 1 oder 2
- d = 1 und e = 1 oder 2
- das Symbol Y für einen Rest mit einer Kohlenwasserstoffgruppe mit 2 bis 20 Kohlenstoffatomen und einer Epoxidfunktion und gegebenenfalls mit einem oder mehreren Heteroatomen wie einem Sauerstoffatom steht, vorzugsweise das Symbol Y aus den Resten bestehend aus der Gruppe: Alkylglycidylether, lineares, verzweigtes oder cyclisches Epoxyalkyl, lineares, verzweigtes oder cyclisches Epoxyalkenyl und Carbonsäureglycidylester ausgewählt ist;
- die Symbole $Z^1$, $Z^2$ und $Z^3$ gleich oder verschieden sind und für eine einwertige Kohlenwasserstoffgruppe mit 1 bis 30 Kohlenstoffatomen, die vorzugsweise aus der Gruppe bestehend aus Alkylgruppen mit 1 bis 8 Kohlenstoffatomen und Arylgruppen mit 6 bis 12 Kohlenstoffatomen ausgewählt ist und noch weiter bevorzugt aus der Gruppe bestehend aus einer Methyl-, Ethyl-, Propyl-, 3,3,3-Trifluorpropyl-, Xylyl-, Tolyl- und Phenylgruppe ausgewählt ist, stehen,

mit den folgenden Bedingungen:

- das Additiv **X** umfasst pro Molekül mindestens zwei Siloxyleinheiten **(I.1)** mit epoxidfunktionellen Kohlenwasserstoffgruppen, mindestens drei Siloxyleinheiten **(I.3)** mit Hydrogensiloxylgruppen und eine Gesamtzahl **N** von Siloxyleinheiten zwischen 7 und 30, und
- das Additiv **X** hat einen Gehalt an Siloxyleinheiten **(I.1)** größer oder gleich 0,2 mol pro 100 g Additiv **X.**

**2.** Silikonzusammensetzung **A** nach Anspruch 1, wobei das Additiv **X** einen Gehalt an Siloxyleinheiten **(I.1)** größer oder gleich 0,2 mol pro 100 g Additiv **X** und einen Gehalt an Siloxyleinheiten **(I.3)** größer oder gleich 0,3 mol pro 100 g Additiv **X** hat.

**3.** Silikonzusammensetzung **A** nach Anspruch 1, wobei das Additiv **X** eine Zahl **N1** von Siloxyleinheiten **(I.1)** und eine Zahl **N3** von Siloxyleinheiten **(I.3)** aufweist, die folgende Bedingungen erfüllen:

- 2 ≤ **N1** ≤ 10 und vorzugsweise 3 ≤ **N1** ≤ 7 und
- 3 ≤ **N3** ≤ 20 und vorzugsweise 5 ≤ **N3** ≤ 20.

**4.** Silikonzusammensetzung **A** nach Anspruch 1, wobei das Additiv **X** eine Gesamtzahl **N** von Siloxyleinheiten zwischen 7 und 25 einschließlich der Grenzen und noch weiter bevorzugt zwischen 7 und 15 aufweist.

**5.** Silikonzusammensetzung **A** nach Anspruch 1, **dadurch gekennzeichnet, dass** der Gehalt an Additiv **X** zwischen 0,3 und 10 Gew.-%, bezogen auf die Gesamtmasse der Zusammensetzung **A,** und vorzugsweise zwischen 0,3 und 7 % liegt.

**6.** Silikonzusammensetzung **A** nach Anspruch 1, **dadurch gekennzeichnet, dass** die Silikonbasis **B** Folgendes umfasst:

(A) mindestens ein Alkenylpolyorganosiloxan **E** mit mindestens zwei Siloxyleinheiten **(I.5)** der folgenden Formel:

$$W_aZ_bSiO_{\frac{4-(a+b)}{2}} \quad \textbf{(I.5)}$$

- in der:

- a = 1 oder 2, b = 0, 1 oder 2 und a+b = 1, 2 oder 3;
- W unabhängig für eine Alkenylgruppe, die vorzugsweise 2 bis 6 Kohlenstoffatome aufweist, und noch weiter bevorzugt eine Vinyl- oder Allylgruppe steht und
- Z unabhängig für eine einwertige Kohlenwasserstoffgruppe, die 1 bis 30 Kohlenstoffatome aufweist und vorzugsweise aus der Gruppe bestehend aus Alkylgruppen mit 1 bis 8 Kohlenstoffatomen inklusive und Arylgruppen ausgewählt ist und noch weiter bevorzugt aus der Gruppe bestehend aus einem Methyl-, Ethyl-, Propyl-, 3,3,3-Trifluorpropyl-, Xylyl-, Tolyl- und Phenylrest ausgewählt ist, steht stehen,

(B) gegebenenfalls mindestens ein vernetzendes Silikonöl **D,** das pro Molekül mindestens drei siliciumgebundene Wasserstoffatome umfasst,
(C) mindestens einen Polyadditionskatalysator **F,** vorzugsweise eine Verbindung mindestens eines Metalls der Platingruppe;
(D) gegebenenfalls mindestens einen Vernetzungsinhibitor **G;**
(E) gegebenenfalls ein haftungsmodulierendes System **H;**
(F) gegebenenfalls mindestens ein Verdünnungsmittel **I**;
(G) gegebenenfalls mindestens ein Antibeschlagadditiv **J,**
(H) gegebenenfalls mindestens ein Polyorganosiloxanharz **K** und
(I) gegebenenfalls mindestens ein nicht funktionalisiertes Polyorganosiloxan **L,** das aus den Siloxyleinheiten **(I.6)** der folgenden Formel besteht:

$$Z^1_aSiO_{\frac{4-a}{2}} \quad \textbf{(I.6)}$$

in der:

- a = 0, 1, 2 oder 3,
- $Z^1$ unabhängig für eine einwertige Kohlenwasserstoffgruppe, die 1 bis 30 Kohlenstoffatome aufweist und vorzugsweise aus der Gruppe bestehend aus Alkylgruppen mit 1 bis 8 Kohlenstoffatomen inklusive und Arylgruppen ausgewählt ist und noch weiter bevorzugt aus der Gruppe bestehend aus einem Methyl-, Ethyl-, Propyl-, 3,3,3-Trifluorpropyl-, Xylyl-, Tolyl- und Phenylrest ausgewählt ist, steht.

**7.** Silikonzusammensetzung **A** nach Anspruch 1, **dadurch gekennzeichnet, dass** für die Siloxyleinheit **(I.1)** des Additivs **X** Y aus der Gruppe bestehend aus den Gruppen **(R-1)** bis **(R-6)** der folgenden Formeln ausgewählt ist:

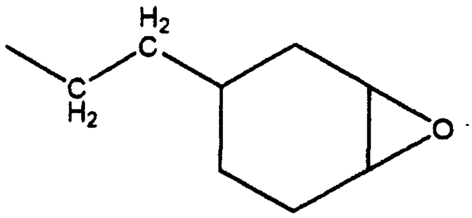

**(R-1)**

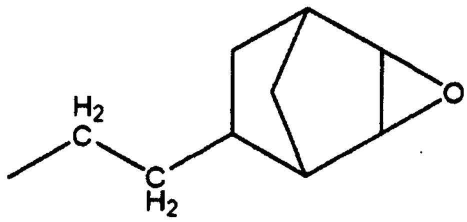

**(R-2)**

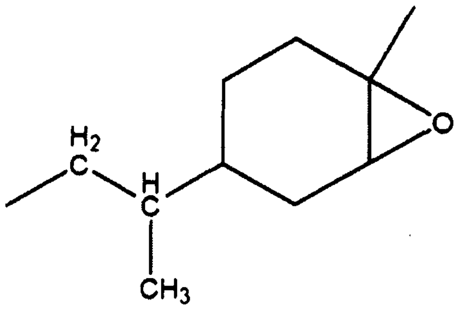

**(R-3)**

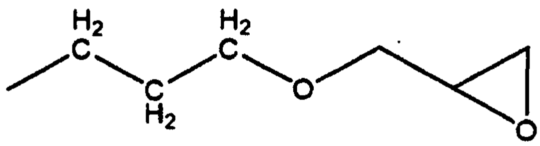

**(R-4)**

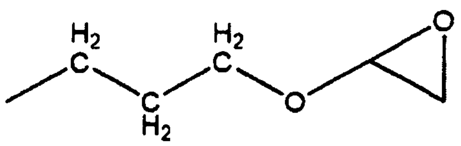

**(R-5)**

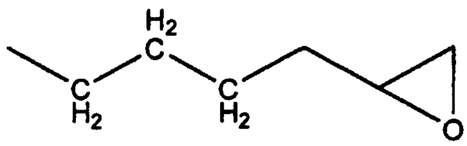

**(R-6)**

8. Silikonzusammensetzung **A** nach Anspruch 1, **dadurch gekennzeichnet, dass** für die Siloxyleinheit **(I.1)** des Additivs **X** Y die Gruppe **(R-4)** der folgenden Formel ist:

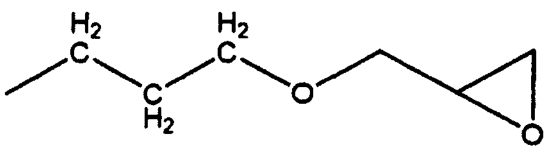

**(R-4)**

9. Silikonzusammensetzung **A** nach einem der vorhergehenden Ansprüche, wobei die Mengen der Bestandteile so bemessen sind, dass das [≡SiH]/[≡SiAlkenyl]-Molverhältnis zwischen 1 und 7 und vorzugsweise zwischen 1 und 5 liegt, wobei:

    - [≡SiH] = Gesamtmolzahl von Siloxyleinheiten mit einem siliciumgebundenen Wasserstoffatom und
    - [≡SiAlkenyl] = Gesamtmolzahl von Siloxyleinheiten mit einem siliciumgebundenen Alkenylrest.

10. Silikonzusammensetzung **A** nach Anspruch 2, wobei das Additiv **X** eine dynamische Viskosität bei 25 °C (gemessen gemäß der in der Beschreibung beschriebenen Methode) zwischen 10 und 700 mPa.s und vorzugsweise zwischen 15 und 300 mPa.s aufweist.

11. Silikonelastomer, das durch Vernetzung und/oder Härtung der Silikonzusammensetzung **A** gemäß einem der Ansprüche 1 bis 10 erhältlich ist.

**12.** Verfahren zur Herstellung einer wasserabweisenden und antihaftenden Beschichtung auf einem Träger, **dadurch gekennzeichnet, dass** es darin besteht, dass man auf mindestens eine Fläche dieses Trägers mindestens eine Schicht der Silikonzusammensetzung **A** gemäß einem der Ansprüche 1 bis 10 aufbringt und gewährleistet, dass diese Schicht vernetzt, vorzugsweise durch Aktivierung durch Erhitzen.

**13.** Träger, **dadurch gekennzeichnet, dass** er mindestens eine nach dem Verfahren gemäß Anspruch 12 oder aus Silikonzusammensetzung **A** gemäß einem der Ansprüche 1 bis 10 erhaltene wasserabweisende und antihaftende Beschichtung aufweist.

**14.** Träger nach Anspruch 13, **dadurch gekennzeichnet, dass** es sich um einen flexiblen Träger aus der Gruppe bestehend aus Papier, einer Polymerfolie vom Polyolefin-, Polypropylen-, Polyethylen- oder Polyestertyp und einer Polymerfolie zum Schutz der Klebefläche eines Selbstklebe- oder Haftklebeelements handelt.

## Claims

**1.** Silicone composition A comprising a silicone base **B** capable of crosslinking or curing by polyaddition and **characterized in that** it comprises at least one additive **X** which is a linear organopolysiloxane comprising siloxyl units **(1.1)** to **(1.3)** having the formulae below:

-

$$Y_a Z^1_b SiO_{\frac{4-(a+b)}{2}} \quad \textbf{(I.1)}$$

-

$$Z^2_3 SiO_{\frac{1}{2}} \quad \textbf{(I.2)}$$

-

$$H_d Z^3_e SiO_{\frac{4-(d+e)}{2}} \quad \textbf{(I.3)}$$

and not comprising units of formula **(I.4):**

-

$$Z^2_2 SiO_{\frac{2}{2}} \quad \textbf{(I.4)}$$

in which

- a=1 and b=1 or 2
- d=1 and e=1 or 2
- the symbol Y represents a radical comprising a hydrocarbon-based group having from 2 to 20 carbon atoms and an epoxy function, with optionally one or more heteroatoms such as an oxygen atom, preferably the symbol Y is chosen from the radicals consisting of the group: alkyl glycidyl ether, linear, branched or cyclic epoxyalkyl, linear, branched or cyclic epoxyalkenyl and carboxylic acid glycidyl ester,
- the symbols $Z^1$, $Z^2$ and $Z^3$, which may be identical or different, represent a monovalent hydrocarbon-based group containing from 1 to 30 carbon atoms, preferably chosen from the group formed by alkyl groups containing from 1 to 8 carbon atoms and aryl groups containing from 6 to 12 carbon atoms, and even more preferentially chosen from the group consisting of a methyl, ethyl, propyl, 3,3,3-trifluoropropyl, xylyl, tolyl and phenyl group, with the following conditions:

- the additive **X** comprises, per molecule, at least two siloxyl units **(I.1)** bearing epoxyfunctional hydrocarbon-based groups, at least three siloxyl units **(I.3)** bearing hydrosiloxyl groups and a total number **N** of siloxyl units of between 7 and 30 and
- the additive **X** has a content of siloxyl units **(I.1)** of greater than or equal to 0.2 mol per 100 g of additive **X.**

**2.** Silicone composition **A** according to Claim 1, wherein the additive **X** has a content of siloxyl units **(I.1)** of greater than or equal to 0.2 mol per 100 g of additive **X** and a content of siloxyl units **(I.3)** of greater than or equal to 0.3 mol per 100 g of additive **X.**

**3.** Silicone composition **A** according to Claim 1, wherein the additive **X** has a number **N1** of siloxyl units **(I.1)** and a number **N3** of siloxyl units **(I.3)** which satisfy the following conditions:

- $2 \leq$ **N1** $\leq 10$ and preferably $3 \leq$ **N1** $\leq 7$, and
- $3 \leq$ **N3** $\leq 20$ and preferably $5 \leq$ **N3** $\leq 20$.

**4.** Silicone composition **A** according to Claim **1,** wherein the additive **X** has a total number **N** of siloxyl units of between 7 and 25, limits inclusive, and even more preferentially between 7 and 15.

**5.** Silicone composition **A** according to Claim **1, characterized in that** the content of additive **X** is between 0.3% and 10% by weight relative to the total weight of the composition **A,** preferably between 0.3% and 7%.

**6.** Silicone composition **A** according to Claim **1, characterized in that** the silicone base **B** comprises:

(A) at least one alkenylated organopolysiloxane **E** comprising at least two siloxyl units **(1.5)** having the formula below:

$$W_a Z_b SiO_{\frac{4-(a+b)}{2}} \quad \textbf{(I.5)}$$

- in which:

- a= 1 or 2, b= 0, 1 or 2 and a+b= 1, 2 or 3;
- W independently represents an alkenyl group, preferably having from 2 to 6 carbon atoms, and even more preferentially a vinyl or allyl group, and
- Z independently represents represent a monovalent hydrocarbon-based group containing from 1 to 30 carbon atoms, preferably chosen from the group formed by alkyl groups containing from 1 to 8 carbon atoms inclusive and aryl groups, and even more preferentially chosen from the group formed by a methyl, ethyl, propyl, 3,3,3-trifluoropropyl, xylyl, tolyl and phenyl radical;

(B) optionally at least one crosslinking silicone oil **D** comprising, per molecule, at least three hydrogen atoms bonded to the silicon;
(C) at least one polyaddition catalyst **F,** preferably a compound of at least one metal belonging to the platinum group;
(D) optionally at least one crosslinking inhibitor **G;**
(E) optionally an adhesion modulator system **H;**
(F) optionally at least one diluent **I;**
(G) optionally at least one anti-misting additive **J;**
(H) optionally at least one organopolysiloxane resin **K;** and
(I) optionally at least one non-functionalized organopolysiloxane **L** consisting of the siloxyl units **(I.6)** of formula:

$$Z^1_aSiO_{\frac{4-a}{2}} \quad \textbf{(I.6)}$$

in which:

- a= 0, 1, 2 or 3,
- $Z^1$ independently represents a monovalent hydrocarbon-based group containing from 1 to 30 carbon atoms, preferably chosen from the group formed by alkyl groups containing from 1 to 8 carbon atoms inclusive and aryl groups, and even more preferentially chosen from the group formed by a methyl, ethyl, propyl, 3,3,3-trifluoropropyl, xylyl, tolyl and phenyl radical.

7. Silicone composition **A** according to Claim **1, characterized in that**, for the siloxyl unit **(I.1)** of the additive **X** , Y is chosen from the group consisting of the groups **(R-1)** to **(R-6)** having the formulae below:

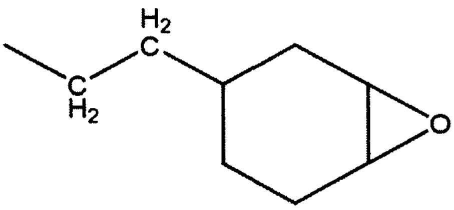

**(R-1)**

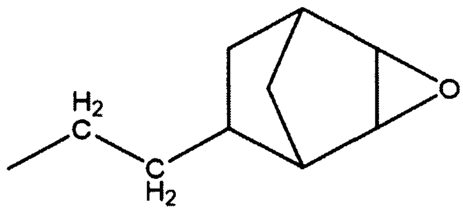

**(R-2)**

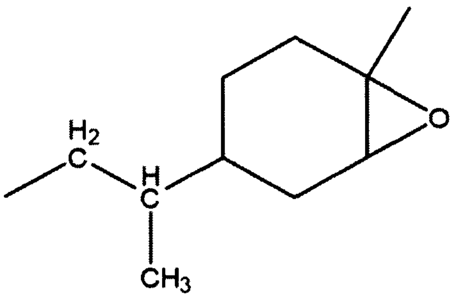

**(R-3)**

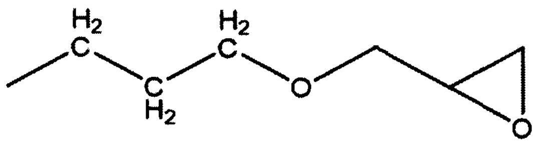

**(R-4)**

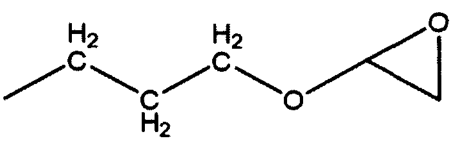

**(R-5)**

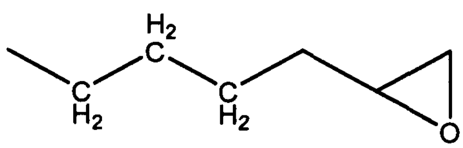

**(R-6)**

8. Silicone composition **A** according to Claim 1, **characterized in that**, for the siloxyl unit **(I.1)** of the additive **X,** Y is the group **(R-4)** having the formula below:

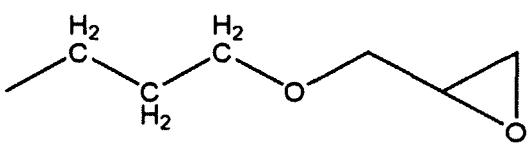

**(R-4)**

9. Silicone composition **A** according to any one of the preceding claims, wherein the amounts of the constituents are

such that the [≡SiH]/[≡SiAlkenyl] molar ratio is between 1 and 7 and preferably between 1 and 5 with:

- [≡SiH]= total number of moles of siloxyl units comprising a hydrogen atom bonded to the silicon, and
- [≡SiAlkenyl] = total number of moles of siloxyl units comprising an alkenyl radical bonded to the silicon.

**10.** Silicone composition **A** according to Claim 1, wherein the additive **X** has a dynamic viscosity at 25°C (measured according to the method described in the description) of between 10 and 700 mPa.s and preferably between 15 and 300 mPa.s.

**11.** Silicone elastomer that can be obtained by crosslinking and/or curing the silicone composition **A** as described in any one of Claims 1 to 10.

**12.** Process for producing a water-repellent release coating on a support, **characterized in that** it consists in applying, on at least one face of this support, at least one layer of the silicone composition **A** as described in any one of Claims 1 to 10 and in making sure that this layer crosslinks, preferably by heat-activating it.

**13.** Support, **characterized in that** it comprises at least one water-repellent release coating obtained according to the process as described in Claim 12 or from silicone composition **A** as described in any one of Claims 1 to 10.

**14.** Support according to Claim 13, **characterized in that** it is a flexible support chosen from the group consisting of a paper, a polymer film of polyolefin, polypropylene, polyethylene or polyester type, and a polymer film for protecting the adhesive face of a self-adhesive element or pressure-sensitive adhesive element.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 1594693 A
- EP 2563870 A
- US 2007197742 A
- EP 0904315 A
- EP 1309647 A
- US 3159601 A
- US 3159602 A
- US 3220972 A
- EP 0057459 A
- EP 0188978 A
- EP 0190530 A
- US 3419593 A
- US 3715334 A
- US 3377432 A
- US 3814730 A
- FR 1528464 B
- FR 2372874 A
- FR 2450642 B
- US 3772247 B
- EP 0601938 A
- US 6864311 B
- US 6291540 B
- US 5468902 B
- US 6743883 B
- US 20040048975 A


### Littérature non-brevet citée dans la description


- Chemistry and Technology of Silicones. Academic Press, 1968, 1-9